(19) **Europäisches Patentamt / European Patent Office / Office européen des brevets**

(11) **EP 4 498 715 A1**

(12) **EUROPEAN PATENT APPLICATION**
published in accordance with Art. 153(4) EPC

(43) Date of publication:
29.01.2025  Bulletin 2025/05

(21) Application number: 23791128.4

(22) Date of filing: 14.04.2023

(51) International Patent Classification (IPC):
*H04W 4/70* (2018.01)

(52) Cooperative Patent Classification (CPC):
H04W 4/70; H04W 16/14; H04W 74/00;
H04W 74/08

(86) International application number:
PCT/CN2023/088256

(87) International publication number:
WO 2023/202473 (26.10.2023 Gazette 2023/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  21.04.2022  CN 202210421584

(71) Applicant: **Sony Group Corporation**
**Tokyo 108-0075 (JP)**

(72) Inventor: **WANG, Xiaoxue**
**Beijing 100027 (CN)**

(74) Representative: **D Young & Co LLP**
**3 Noble Street**
**London EC2V 7BQ (GB)**

(54) **USER EQUIPMENT, WIRELESS COMMUNICATION METHOD, AND COMPUTER-READABLE STORAGE MEDIUM**

(57)  The present disclosure relates to a user equipment, a wireless communication method, and a computer-readable storage medium. The user equipment according to the present disclosure comprises a processing circuit, configured to: generate channel occupancy time (COT) sharing information, the COT sharing information comprising the position of the COT of the user equipment in the time domain, a resource occupied by the user equipment in the COT, and the type of a channel detection process of the user equipment; and send the COT sharing information to another user equipment. By using the user equipment, the wireless communication method, and the computer-readable storage medium disclosed in the present disclosure, the resource utilization rate of a process of carrying out sidelink communications by using an unlicensed spectrum can be improved, the reliability of transmission on the unlicensed spectrum is enhanced, and overhead caused by resource selection is reduced.

**FIG. 1**

user equipment 100

- COT sharing information generation unit 110
- channel detection unit 130
- request generation unit 150
- resource selection unit 140
- communication unit 120

## Description

This application claims priority to Chinese Patent Application No. 202210421584.4 titled "User equipment, wireless communication method and computer-readable storage medium", filed on April 21, 2022 with the China National Intellectual Property Administration, which is incorporated herein by reference in its entirety.

## FIELD

Embodiments of the present disclosure generally relates to the field of wireless communication, and in particular to user equipment, a wireless communication method and a computer-readable storage medium. More particularly, the present disclosure relates to user equipment in a wireless communication system, a wireless communication method performed by user equipment in a wireless communication system, and a computer-readable storage medium.

## BACKGROUND

In communication through a sidelink, a UE (User Equipment) can occupy an unlicensed channel for a period of time through a channel detection mechanism such as LBT (Listen Before Talk). The period of time may be referred to as COT (Channel Occupy Time). After the channel detection indicates idleness, the UE can obtain up to 10ms of channel occupancy time. In cases where a subcarrier spacing is 15kHz, 30kHz, and 60kHz, the UE has time domain resources of 10, 20, and 40 time slots, respectively, within the channel occupancy time of 10ms. In direct link communication, one UE can schedule the resource of only one time slot for transmission at a time, and can indicate locations of two other time slots in the future. As can be seen, one UE may obtain a long COT but use only a few resources, resulting in a significant reduction in resource utilization.

Therefore, it is necessary to provide a technical solution to improve the resource utilization in a process of using unlicensed spectrum for direct link communication. In addition, the present disclosure is further intended to provide a technical solution to improve a reliability of transmission on an unlicensed spectrum and reduce overhead caused by resource selection.

## SUMMARY

This section provides a general summary of the present disclosure, rather than a comprehensive disclosure of a full scope or all features of the present disclosure.

An object of the present disclosure is to provide user equipment, a wireless communication method and a computer-readable storage medium, with which a resource utilization in a process of sidelink communication using an unlicensed spectrum can be improved, a reliability of transmission on the unlicensed spectrum can be improved, and overhead due to resource selection can be reduced.

According to an aspect of the present disclosure, user equipment is provided. The user equipment includes processing circuitry configured to: generate Channel Occupy Time COT sharing information that includes a location of a COT of the user equipment in a time domain, resources occupied by the user equipment in the COT, and a type of a channel detection process of the user equipment; and transmit the COT sharing information to another user equipment, wherein the type of the channel detection process indicates complexity of the channel detection process.

According to another aspect of the present disclosure, user equipment is provided. The user equipment includes processing circuitry configured to: receive, from another user equipment, Channel Occupy Time COT sharing information that includes a location of a COT of the other user equipment in a time domain, resources occupied by the other user equipment in the COT, and a type of a channel detection process of the other user equipment; and determine whether to share the COT of the other user equipment according to the type of the channel detection process of the other user equipment, wherein the type of the channel detection process indicates complexity of the channel detection process.

According to another aspect of the present disclosure, a wireless communication method performed by user equipment is provided. The wireless communication method includes: generating Channel Occupy Time COT sharing information that includes a location of a COT of the user equipment in a time domain, resources occupied by the user equipment in the COT, and a type of a channel detection process of the user equipment; and transmitting the COT sharing information to another user equipment, wherein the type of the channel detection process indicates complexity of the channel detection process.

According to another aspect of the present disclosure, a wireless communication method is provided. The wireless communication method includes: receiving, from another user equipment, Channel Occupy Time COT sharing information that includes a location of a COT of the other user equipment in a time domain, resources occupied by the other user equipment in the COT, and a type of a channel detection process of the other user equipment; and determining whether to share the COT of the other user equipment according to the type of the channel detection process of the other user equipment, wherein the type of the channel detection process indicates complexity of the channel detection process.

According to another aspect of the present disclosure, a computer-readable storage medium including executable computer instructions is provided. The executable computer instructions, when executed by a computer, cause the computer to perform the wireless communication method according to the present disclosure.

According to another aspect of the present disclosure, a computer program is provided. The computer program, when executed by a computer, causes the computer to perform the wireless communication method according to the present disclosure.

With the user equipment, the wireless communication method and the computer-readable storage medium according to the present disclosure, the COT sharing information can be generated by the user equipment. The COT sharing information includes a location of a COT of the user equipment in a time domain, resources occupied by the user equipment in the COT, and a type of a channel detection process of the user equipment. The user equipment receiving the COT sharing information can determine whether to share the received COT sharing information according to the type of the channel detection process. In this way, the COT can be shared between different user equipment under an appropriate circumstance, and therefore a resource utilization can be improved.

With the user equipment, the wireless communication method and the computer-readable storage medium according to the present disclosure, the channel detection auxiliary information can be generated by the receiver user equipment of the direct link. The channel detection auxiliary information includes frequency domain resources at which the channel detection process is targeted and which is recommended by the receiver user equipment, and/or resource occupation information. In this way, the transmitter user equipment can perform the channel detection process and/or select resources according to the channel detection auxiliary information, and therefore a reliability of transmission on an unlicensed spectrum can be improved and overhead due to resource selection can be reduced.

Further areas of applicability will become apparent from the description provided herein. The description and specific examples in this summary are for purposes of illustration only and are not intended to limit the scope of the present disclosure.

## BRIEF DESCRIPTION OF THE DRAWINGS

The accompanying drawings described herein are only for illustrative purposes of selected embodiments, rather than all possible embodiments, and are not intended to limit the scope of the present disclosure. In the drawings:

Figure 1 is a block diagram illustrating an exemplary configuration of user equipment according to an embodiment of the present disclosure;

Figure 2 is a schematic diagram illustrating a process of broadcasting COT sharing information by user equipment according to an embodiment of the present disclosure;

Figure 3 is a schematic diagram illustrating a process of selecting resources within a COT by user equipment according to an embodiment of the present disclosure;

Figure 4 is a block diagram illustrating an exemplary configuration of user equipment according to another embodiment of the present disclosure;

Figure 5 is a schematic diagram illustrating a situation in which UE2 shares a COT of UE1 according to an embodiment of the present disclosure;

Figure 6 is a schematic diagram illustrating a situation in which UE3 shares a COT of UE1 according to an embodiment of the present disclosure;

Figure 7 is a schematic diagram illustrating a situation in which UE4 does not share a COT of UE1 according to an embodiment of the present disclosure;

Figure 8 is a schematic diagram illustrating a situation in which UE5 does not share a COT of UE1 according to an embodiment of the present disclosure;

Figure 9 is a schematic diagram illustrating a situation in which UE6 shares a COT of UE1 according to an embodiment of the present disclosure;

Figure 10 is a schematic diagram illustrating a situation in which UE7 shares a COT of UE1 according to an embodiment of the present disclosure;

Figure 11 is a schematic diagram illustrating a process of determining a resource selection window according to an embodiment of the present disclosure;

Figure 12 is a schematic diagram illustrating a process of determining a resource selection window according to another embodiment of the present disclosure;

Figure 13 is a signaling flow chart illustrating a process of sharing a COT between UEs according to an embodiment of the present disclosure;

Figure 14 is a signaling flow chart illustrating a process of sharing a COT between a transmitter UE and a receiver UE according to an embodiment of the present disclosure;

Figure 15 is a signaling flow chart illustrating a process of providing channel detection auxiliary information from a receiver UE to a transmitter UE according to an embodiment of the present disclosure;

Figure 16 is a signaling flow chart illustrating a process of providing channel detection auxiliary information from a receiver UE to a transmitter UE according to an embodiment of the present disclosure;

Figure 17 is a signaling flow chart illustrating a process of providing channel detection auxiliary information from a receiver UE to a transmitter UE according to an embodiment of the present disclosure;

Figure 18 is a signaling flow chart illustrating a process of providing channel detection auxiliary information from a receiver UE to a transmitter UE according to an embodiment of the present disclosure;

Figure 19 is a flowchart illustrating a wireless communication method performed by user equipment according to an embodiment of the present disclosure;

Figure 20 is a flowchart illustrating a wireless communication method performed by user equipment according to another embodiment of the present disclosure;

Figure 21 is a block diagram showing an example of a schematic configuration of a smart phone; and

Figure 22 is a block diagram showing an example of a schematic configuration of a vehicle navigation device.

Although the present disclosure is easily subjected to various modifications and replacements, specific embodiments thereof are shown in the drawings as examples and described in detail here. It should be understood that the description of specific embodiments herein is not intended to limit the present disclosure to specific forms that are disclosed. On the contrary, the present disclosure intends to cover all modifications, equivalents and replacements that fall within the spirit and scope of the present disclosure. It should be noted that a component is indicated by a corresponding reference numeral throughout the drawings.

**DETAILED DESCRIPTION**

Examples of the present disclosure are now fully described with reference to the accompanying drawings. The following description is merely substantially exemplary and is not intended to limit the present disclosure, an application or use thereof.
Exemplary embodiments are provided so that the present disclosure is described in detail and fully conveys the scope thereof to those skilled in the art. Examples of specific components, apparatus, methods and other specific details are set forth to provide detailed understanding of embodiments of the present disclosure.

It will be apparent to those skilled in the art that the exemplary embodiments may be implemented in many different forms without the use of specific details, and they should not be construed as limiting the scope of the present disclosure. In some exemplary embodiments, well-known processes, well-known structures, and well-known technologies are not described in detail.
The description is given in the following order.

1. Description of scenarios;

2. Exemplary configuration of user equipment that shares a COT to another user equipment;

3. Exemplary configuration of user equipment that shares a COT of another user equipment;

4. Signaling interaction process;

5. Method embodiment; and

6. Application example.

<1. Description of scenarios>

A wireless communication system according to the present disclosure may be a 5G NR communication system or a higher-level communication system. Further, the communication system may include multiple user equipment.
According to an embodiment of the present disclosure, user equipment in the wireless communication system can communicate through a sidelink. Furthermore, the user equipment may select resources for the sidelink in an autonomous manner, without assistance of network side equipment. In addition, user equipment may communicate with each other using an unlicensed spectrum. Specifically, the user equipment may obtain a period of time to occupy the unlicensed spectrum through a channel detection mechanism such as LBT.
For such scenario, user equipment in a wireless communication system, a wireless communication method performed by user equipment in a wireless communication system, and a computer-readable storage medium are provided in the present disclosure, with which a resource utilization in a process of sidelink communication using an unlicensed spectrum can be improved, a reliability of transmission on the unlicensed spectrum can be improved, and overhead due to resource selection can be reduced.
The user equipment according to the present disclosure may be a mobile terminal (such as smartphone, tablet personal computer (PC), notebook PC, portable game terminal, portable/dongle-type mobile router, and digital camera), or an in-vehicle terminal (such as car navigation device). The user equipment may be implemented as a terminal that performs machine-to-machine (M2M) communications (which is also referred to as machine type communication (MTC) terminal). Furthermore, the user equipment may be a wireless communication module (such as an integrated circuit module including a single chip) installed on each of the above-mentioned terminals.

<2. Exemplary configuration of user equipment that shares a COT to another user equipment>

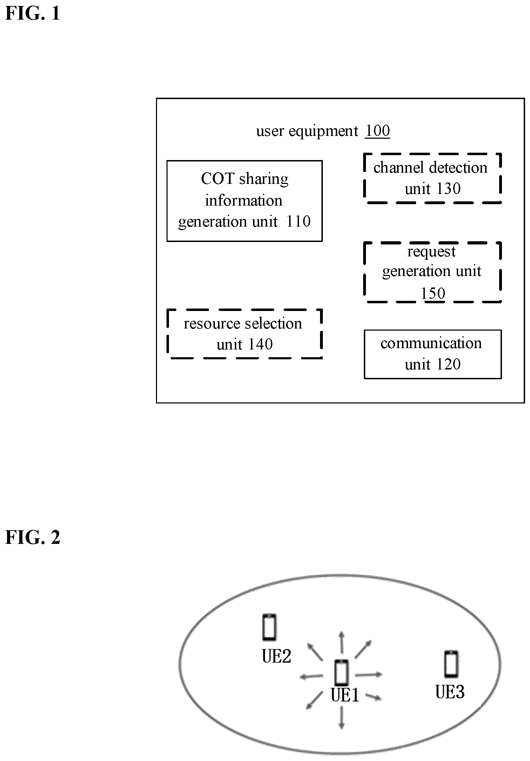

Figure 1 is a block diagram illustrating an exemplary configuration of user equipment 100 according to an embodiment of the present disclosure. The user equipment 100 here may be user equipment that transmits COT sharing information. In addition, the user equipment 100 may be a transmitter user equipment in a sidelink.

As shown in Figure 1, the user equipment 100 may include a COT sharing information generation unit 110 and a communication unit 120.

Here, units of the user equipment 100 may be included in processing circuitry. It should be noted that the user equipment 100 may include a single processing circuit or multiple processing circuits. Further, the processing circuitry may include various discrete functional units for performing various different functions and/or operations. It should be noted that these functional units may be physical entities or logical entities, and units with different names may be implemented by a same physical entity.

According to an embodiment of the present disclosure, the COT sharing information generation unit 110 may generate COT sharing information. Here, the COT sharing information may include a location of a COT of the user equipment 100 in a time domain, resources occupied by the user equipment 100 in the COT, and a type of a channel detection process of the user equipment 100. Here, the type of the channel detection process may indicate complexity of the channel detection process.

According to an embodiment of the present disclosure, the user equipment 100 may transmit the COT sharing information generated by the COT sharing information generation unit 110 to another user equipment through the communication unit 120.

It can be seen that with the user equipment 100 according to the embodiment of the present disclosure, the COT sharing information can be generated, which includes the type of the channel detection process of the user equipment 100. Thereby, user equipment receiving the COT sharing information can determine whether to share the received COT according to the type of the channel detection process. In this way, the COT can be shared between different user equipment under an appropriate circumstance, and thus a resource utilization can be improved.

According to an embodiment of the present disclosure, as shown in Figure 1, the user equipment 100 may further include a channel detection unit 130 configured to perform a channel detection process on unlicensed frequency domain resources. Here, the unlicensed frequency domain resources may include one or more unlicensed sub-channels. In other words, the user equipment 100 may be pre-configured with one or more unlicensed sub-channels, and thereby perform a channel detection process on the configured sub-channels. According to an embodiment of the present disclosure, the user equipment 100 may be pre-configured with unlicensed frequency domain resources by network side equipment such as base station equipment, or a pre-configuration process may be performed before the user equipment 100 is delivered from a factory.

According to an embodiment of the present disclosure, the channel detection process includes, but is not limited to, an LBT process.

According to an embodiment of the present disclosure, if an idle sub-channel is detected in the channel detection process performed by the channel detection unit 130, it is possible to use the sub-channel for a period of time, which period of time is referred to as COT. As such, the COT sharing information generation unit 110 may generate the COT sharing information according to the COT obtained by the user equipment 100.

According to an embodiment of the present disclosure, the COT sharing information may include a location of the COT of the user equipment 100 in a time domain. For example, the COT sharing information may include a start time and an end time of the COT of the user equipment 100 in a time domain. For another example, the COT sharing information may include a start time of the COT of the user equipment 100 in a time domain and an a duration of the COT. Here, the start time and end time of the COT in the time domain may be represented by relative time represented by differences from a reference time, or may be represented by absolute time.

According to an embodiment of the present disclosure, as shown in Figure 140, the user equipment 100 may further include a resource selection unit 140. The resource selection unit 1260 is configured to select resources for sidelink transmission from the COT. For example, the user equipment 100 may select resources of N time slots from the COT for transmission of the sidelink, where N is a positive integer.

According to an embodiment of the present disclosure, the COT sharing information may further include resources occupied by the user equipment 100 in the COT. For example, the COT sharing information may include a time-frequency location of a resource selected by the resource selection unit 140 of the user equipment 100.

According to an embodiment of the present disclosure, the COT sharing information may further include a type of the channel detection process of the user equipment 100, and the type of the channel detection process may indicate complexity of the channel detection process.

According to the existing standards, in a case where a channel detection is energy detection, a type of a channel detection process may include: (a) directly transmitting data without performing a channel detection process (Type 1, Cat1); (b) an energy detection with random backoff (Type 2, Cat2); (c) an energy detection with random backoff but fixed contention window size (CWS) (Type 3, Cat3); and (d) an energy detection with random backoff and variable contention window size (Type 4, Cat4). In type (b), data transmission occurs directly after the energy detection indicates idleness. In type (c) and type (d), the channel detection process includes two stages. A first stage includes an initial detection period and a random backoff period, and a second stage includes a self-deferral period. The random backoff period follows the initial detection period. During the random backoff period, the energy detection is still performed. In this period, backoff is performed by setting a random backoff counter (also referred to as counter). In a case where the energy detection indicates that a channel is occupied, the random backoff counter is interrupted. The random backoff counter is set based on a contention window size. In a case where a channel is detected to be idle and a time slot for data transmission has not arrived, the self-deferral period is entered to wait for arrival of the time slot for data transmission. The energy detection is still performed during the self-deferral period. In a case where a channel is detected being occupied, the channel cannot be used to for data transmission. That is, in type (c) and type (d), the energy detection is performed in both stages of the channel detection process, that is, in the initial detection period, the random backoff period, and the self-deferral period. A main difference between type (c) and type (d) is that: the contention window size in type (c) is fixed, while the contention window size is variable in type (d).

It can be seen that the type of channel detection process can indicate complexity of the channel detection process. The complexity of the channel detection process varies from low to high for types from Cat1 to Cat4. The type of the channel detection process may further indicate a time of the channel detection process. The time of the channel detection process for types from Cat1 to Cat4 is from short to long (the channel detection process is not performed in Cat1, and therefore the time of the channel detection process is 0, which is the lowest). In addition, the type of the channel detection process may further indicate a reliability of obtained COT. The reliability of COT for types from Cat1 to Cat4 varies from low to high. In other words, the Cat4 channel detection process has the highest complexity, the longest time for channel detection, and the most reliable obtained COT. As such, resources selected from the COT are the most reliable. According to an embodiment of the present disclosure, in a case where the type of the channel detection process includes the four types as described above, 2 bits may be used to indicate the type of the channel detection process.

According to an embodiment of the present disclosure, the COT sharing information may further include frequency domain resources at which the channel detection process of the user equipment 100 is targeted. Specifically, the COT sharing information may include indication information (sub channel index) of a sub-channel targeted by the channel detection process of the user equipment 100. In this way, receiving user equipment which is configured with the same sub channel may share the COT of the user equipment 100.

According to an embodiment of the present disclosure, the user equipment 100 may transmit the COT sharing information generated by the COT sharing information generation unit 110 through first stage SCI (Sidelink Control Information). That is, the user equipment 100 may use a PSCCH (physical sidelink control channel) to carry the SCI, where the SCI includes the COT sharing information.

According to an embodiment of the present disclosure, in the first stage SCI: a new COT field may be added to indicate a location of the COT in a time domain; a new type field of the channel detection process may be added to indicate a type of the channel detection process; and a new field of frequency domain resources at which the channel detection process is targeted may be added to indicate frequency domain resources at which the channel detection process is targeted. In addition, a resource reservation period field may be deleted from the first stage SCI. The resource reservation period field indicates resources reserved for a next period in a licensed spectrum. However, in an unlicensed spectrum, it cannot be determined whether idle resources can be detected in a channel detection process in a next period, and therefore the field may be deleted to reduce signaling overhead.

Figure 2 is a schematic diagram illustrating a process of broadcasting COT sharing information by user equipment according to an embodiment of the present disclosure. As shown in Figure 2, UE1 obtains a COT after performing a channel detection process. UE1 may transmit SCI information by broadcasting to include COT sharing information, so that UE2 and UE3 around UE1 can receive the COT sharing information.

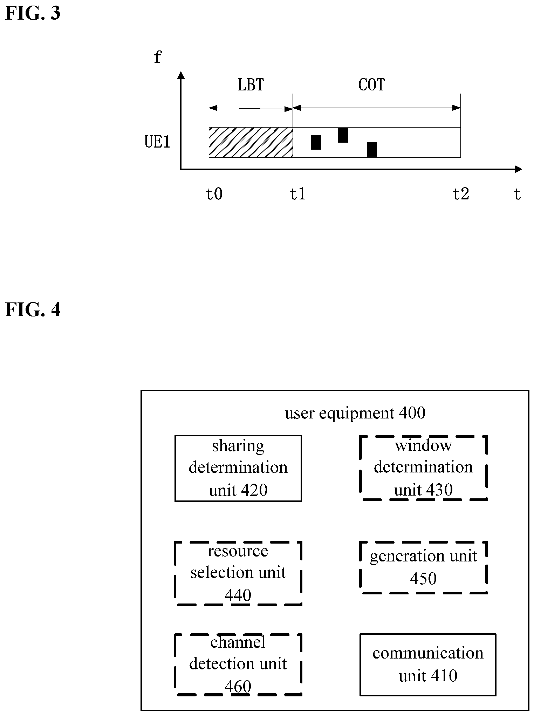

Figure 3 is a schematic diagram illustrating a process of selecting resources within a COT by user equipment according to an embodiment of the present disclosure. As shown in Figure 3, UE1 performs LBT of Cat4 from time to to t1 to obtain a COT from t1 to t2, in which three black areas represent resources selected by UE1 within the COT. In this case, UE1 may generate COT sharing information, which includes a start time t1, an end time t2 of the COT, locations of the three resources selected by UE1, and a type Cat4 of the LBT of UE1.

According to an embodiment of the present disclosure, the user equipment 100, when serving as transmitter user equipment of a sidelink, may establish a PC5 (pass-through link interface) RRC (Radio Resource Control) connection with receiver user equipment of the sidelink.

According to an embodiment of the present disclosure, after the PC5 RRC connection is established between the user equipment 100 and the receiver user equipment, the user equipment 100 may receive channel detection auxiliary information from the receiver user equipment through the communication unit 120.

According to an embodiment of the present disclosure, the channel detection auxiliary information may include frequency domain resources at which a channel detection process is targeted and which is recommended by the receiver user equipment. For example, identification information of a sub channel may be used to represent frequency domain resources at which the channel detection process is targeted and which is recommended by the receiver user equipment.

According to an embodiment of the present disclosure, the channel detection unit 130 may perform a channel detection process according to the frequency domain resources at which the channel detection process is targeted and which is recommended by the receiver user equipment in the channel detection auxiliary information. For example, the channel detection unit 130 may perform the channel detection process on the frequency domain resources recommended by the receiver user equipment, thereby avoiding performing the channel detection process on all the configured unlicensed frequency domain resources and reducing overhead caused by channel detection.

In this way, according to an embodiment of the present disclosure, the user equipment 100 may perform the channel detection process according to the channel detection auxiliary information, and therefore a reliability of transmission on the unlicensed spectrum can be improved and overhead due to resource selection can be reduced.

According to an embodiment of the present disclosure, the channel detection auxiliary information may include resource occupancy information on unlicensed frequency domain resources configured for the user equipment 100. The resource occupancy information may indicate a location of occupied resources on some of the unlicensed frequency domain resources configured for the user equipment 100.

According to an embodiment of the present disclosure, the resource selection unit 140 may select resources according to a result of the channel detection process and the resource occupancy information included in the channel detection auxiliary information. For example, the resource selection unit 140 may select, within a COT obtained through the channel detection process, unoccupied resources determined according to the resource occupy information.

In this way, according to an embodiment of the present disclosure, the user equipment 100 may select resources according to the channel detection auxiliary information, and thus a reliability of transmission on the unlicensed spectrum can be improved and overhead due to resource selection can be reduced.

As mentioned above, the channel detection auxiliary information may include at least one of the recommended frequency domain resources and the resource occupancy information. In a case where the channel detection auxiliary information includes the recommended frequency domain resources but does not include the resource occupancy information, the user equipment 100 may perform the channel detection process according to the recommended frequency domain resources, and select the resources according to the result of the channel detection process. In a case where the channel detection auxiliary information includes the resource occupation information and does not include the recommended frequency domain resources, the user equipment 100 may perform the channel detection process according to an original rule, and select the resources according to the result of the channel detection process and the resource occupancy information. In a case where the channel detection auxiliary information includes both the recommended frequency domain resources and the resource occupancy information, the user equipment 100 may perform the channel detection process according to the recommended frequency domain resources, and select the resources according to the result of the channel detection process and the resource occupancy information.

According to an embodiment of the present disclosure, as shown in Figure 1, the user equipment 100 may further include a request generation unit 150, which is configured to generate request information for requesting the channel detection auxiliary information. Further, the user equipment 100 may transmit the request information to the receiver user equipment through the communication unit 120. That is, the receiver user equipment does not transmit the channel detection auxiliary information to the user equipment 100 actively, but transmits the channel detection auxiliary information in response to a request of the user equipment 100.

According to an embodiment of the present disclosure, the request information generated by the request generation unit 150 may further include information on a data packet of the user equipment 100. Here, the information on the data packet may include one or more types of information including size, delay requirement, and priority of the data packet. That is, in a case where the user equipment 100 has a data packet that needs to be transmitted, the request generation unit 150 generates request information to include information on the data packet.

According to an embodiment of the present disclosure, in a case where the request information includes the information on the data packet, the channel detection auxiliary information received by the user equipment 100 may further include a result of the channel detection process of the receiver user equipment. The result of the channel detection process of the receiver user equipment may include resources that the receiver user equipment recommends to be selected by the user equipment 100.

According to an embodiment of the present disclosure, the resource selection unit 140 may select resources according to the result of the channel detection process of the receiver user equipment and the result of the channel detection process of the channel detection unit 130. Here, due to the PC5 RRC connection between the receiver user equipment and the user equipment 100, the receiver user equipment knows the unlicensed frequency domain resources configured for the user equipment 100, and therefore the frequency domain location of the recommended resources of the receiver user equipment may be located within the unlicensed frequency domain resources configured for the user equipment 100. In this case, when the result of the channel detection process of the channel detection unit 130 conflicts with the resources recommended by the receiver user equipment (for example, the channel detection unit 130 detects that a certain sub-channel is occupied, and the resources recommended by the receiver user equipment are located in the sub-channel), the resource selection unit 140 may not select the resources recommended by the receiver user equipment. When the result of the channel detection process of the channel detection unit 130 does not conflict with the resources recommended by the receiver user equipment (for example, the channel detection unit 130 detects that a certain sub-channel is idle, and the resources recommended by the receiver user equipment are located in the sub-channel), the resource selection unit 140 may select the resources recommended by the receiver user equipment. That is, the resource selection unit 140 may select resources according to predetermined rules in combination with the result of the channel detection process of the user equipment 100 and the result of the channel detection process of the receiver user equipment. Thereby, the selected resources are more reliable.

According to an embodiment of the present disclosure, the resource selection unit 140 may select resources according to merely the result of the channel detection process of the receiver user equipment. That is, the resource selection unit 140 may select the resources recommended by the receiver user equipment directly. In this case, the user equipment 100 does not need to perform a channel detection process, and thus overhead caused by resource selection may be reduced.

According to an embodiment of the present disclosure, the user equipment 100 may receive the channel detection auxiliary information through second stage SCI. That is, the user equipment 100 may use a PSSCH (physical sidelink share channel) to receive the SCI, where the SCI includes the channel detection auxiliary information. In addition, the user equipment 100 may receive the channel detection auxiliary information through a MAC (Medium Access Control) CE (Control Element).

As described above, according to an embodiment of the present disclosure, the transmitter user equipment of the sidelink may receive the channel detection auxiliary information, which includes one or more of the following information: the recommended frequency domain resources at which the channel detection process is targeted, the resources occupancy information, and the recommended resources to select. In this way, the user equipment 100 can perform the channel detection process and/or select resources according to the channel detection auxiliary information, and therefore a reliability of transmission on the unlicensed spectrum can be improved and overhead due to resource selection can be reduced.

It can be seen that with the user equipment 100 according to the embodiment of the present disclosure, the COT sharing information can be generated, which includes the type of the channel detection process of the user equipment 100. Thereby, user equipment receiving the COT sharing information can determine whether to share the received COT according to the type of the channel detection process. In this way, the COT can be shared between different user equipment under an appropriate circumstance, and therefore a resource utilization can be improved. In this way, in a case where the user equipment 100 serves as transmitter user equipment in a sidelink, the user equipment 100 may receive the channel detection auxiliary information from the receiver user equipment, perform the channel detection process and/or select resources according to the channel detection auxiliary information, and therefore a reliability of transmission on the unlicensed spectrum can be improved and overhead due to resource selection can be reduced.

<3. Exemplary configuration of user equipment that shares a COT of another user equipment>

Figure 4 is a block diagram illustrating a structure of user equipment 400 in a wireless communication system according to an embodiment of the present disclosure. The user equipment 400 here may be user equipment that receives COT sharing information from another user equipment. In addition, the user equipment 400 may be a receiver user equipment in a sidelink.

As shown in Figure 4, the user equipment 400 may include a communication unit 410 and a sharing determination unit 420.

Here, units of the user equipment 400 may be included in processing circuitry. It should be noted that the user equipment 400 may include a single processing circuit or multiple processing circuits. Further, the processing circuitry may include various discrete functional units for performing various different functions and/or operations. It should be noted that these functional units may be physical entities or logical entities, and units with different names may be implemented by a same physical entity.

According to an embodiment of the present disclosure, the user equipment 400 may receive, through the communication unit 410 and from another user equipment, COT sharing information that includes a location of a COT of the other user equipment in a time domain, resources occupied by the other user equipment in the COT, and a type of a channel detection process of the other user equipment. Here, the type of the channel detection process indicates complexity of the channel detection process.

According to an embodiment of the present disclosure, the sharing determination unit 420 may determine whether to share the COT of the other user equipment according to the type of the channel detection process of the other user equipment.

As mentioned above, with the user equipment 400 according to the embodiment of the present disclosure, the COT sharing information received may include the type of the channel detection process of the other user equipment. Thereby, the user equipment can determine whether to share the received COT according to the type of the channel detection process. In this way, the COT can be shared between different user equipment under an appropriate circumstance, and therefore a resource utilization can be improved.

According to an embodiment of the present disclosure, the sharing determination unit 420 may determine whether to share the COT of the other user equipment according to the type of the channel detection process of the other user equipment and a type of the channel detection process of the user equipment 400. Here, the sharing determination unit 420 may determine whether to share the COT of the other user equipment through a comparison of complexity of the channel detection process of the other user equipment with complexity of the channel detection process of the user equipment 400.

According to an embodiment of the present disclosure, the sharing determination unit 420 may determine to share the COT of the other user equipment in a case where the complexity of the channel detection process of the user equipment 400 is lower than the complexity of the channel detection process of the other user equipment. For example, in a case where the channel detection process of the user equipment 400 is in a type of Cat2 and the channel detection process of the other user equipment is in a type of Cat4, the sharing determination unit 420 may determine that the complexity of the channel detection process of the user equipment 400 is lower than the complexity of the channel detection process of the other user equipment, and thereby to share the COT of the other user equipment.

As mentioned above, according to an embodiment of the present disclosure, in a case where the complexity of the channel detection process of the user equipment 400 is lower than the complexity of the channel detection process of the other user equipment, it can be determined that the channel detection process performed by the other user equipment has a longer time and obtains a more reliable COT. Therefore, the user equipment 400 may share the COT of the other user equipment, and thus resource utilization can be improved.

For example, the sharing determination unit 420 may determine to share the COT of the other user equipment in a case where the complexity of the channel detection process of the user equipment 400 is lower than the complexity of the channel detection process of the other user equipment, and the user equipment 400 is performing the channel detection process but has not obtained a COT. In this case, the user equipment 400 may determine a size of a resource selection window according to the COT of the other user equipment without using the COT of the user equipment 400.

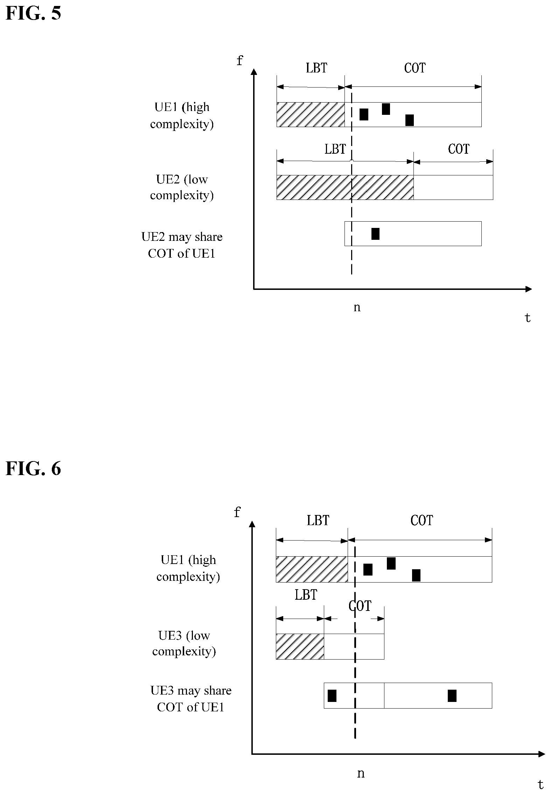

Figure 5 is a schematic diagram illustrating a situation in which UE2 shares a COT of UE1 according to an embodiment of the present disclosure. In Figure 5, UE1 is user equipment that transmits COT sharing information, and UE2 is user equipment that receives the COT sharing information. As shown in Figure 5, at time instant n, UE2 receives the COT sharing information from UE1. At this time, UE2 is performing an LBT process and has not obtained a COT. UE2 determines that complexity of the channel detection process of UE2 is lower than complexity of a channel detection process of UE1. Therefore, it is possible to share the COT of UE1. That is, UE2 determines a size of a resource selection window according to the COT of UE1 and selects resources in the resource selection window. As shown in Figure 5, a black area shows a resource selected by UE2, which is located in the LBT process of UE2. In a case where UE2 does not share the COT of UE1, UE2 cannot select the resources.

For example, the sharing determination unit 420 may determine to share the COT of the other user equipment in a case where the complexity of the channel detection process of the user equipment 400 is lower than the complexity of the channel detection process of the other user equipment, and an end time of the COT of the user equipment 400 is earlier than an end time of the COT of the other user equipment. In this case, the sharing determination unit 420 may determine a size of the resource selection window according to the COT of the other user equipment and the COT of the user equipment 400. Specifically, the user equipment 400 may merge the COT of the other user equipment and the COT of the user equipment 400 and then determine the size of the resource selection window. In other words, the user equipment 400 may extend a length of the resource selection window according to the COT of the other user equipment.

Figure 6 is a schematic diagram illustrating a situation in which UE3 shares a COT of UE1 according to an embodiment of the present disclosure. In Figure 6, UE1 is user equipment that transmits COT sharing information, and UE3 is user equipment that receives the COT sharing information. As shown in Figure 6, at time instant n, UE3 receives the COT sharing information from UE1. At this time, UE3 has finished an LBT process and obtained a COT. UE3 determines that complexity of the channel detection process of UE3 is lower than complexity of a channel detection process of UE1. Therefore, it is possible to share the COT of UE1. That is, UE3 extends a size of a resource selection window according to the COT of UE1 and selects resources in the resource selection window. As shown in Figure 6, two black areas show resources selected by UE3, where a first resource is located in the COT of UE3, and a second source is located in the COT of UE1. In a case where UE3 does not share the COT of UE1, UE3 cannot select the second resource.

According to an embodiment of the present disclosure, the sharing determination unit 420 may determine not to share the COT of the other user equipment in a case where the complexity of the channel detection process of the user equipment 400 is higher than or equal to the complexity of the channel detection process of the other user equipment. For example, in a case where the channel detection process of the user equipment 400 is in a type of Cat4 and the channel detection process of the other user equipment is in a type of Cat2, the sharing determination unit 420 can determine that the complexity of the channel detection process of the user equipment 400 is higher than the complexity of the channel detection process of the other user equipment, and thereby not to share the COT of the other user equipment, but use a COT of the user equipment 400 itself.

As mentioned above, according to an embodiment of the present disclosure, in a case where the complexity of the channel detection process of the user equipment 400 is higher than or equal to the complexity of the channel detection process of the other user equipment, it can be determined that the channel detection process performed by the user equipment 400 has a longer time and obtains a more reliable COT. Therefore, it is not necessary for the user equipment 400 to share the COT of the other user equipment.

For example, the sharing determination unit 420 may determine not to share the COT of the other user equipment in a case where the complexity of the channel detection process of the user equipment 400 is higher than or equal to the complexity of the channel detection process of the other user equipment, and the user equipment 400 is performing the channel detection process but has not obtained a COT.

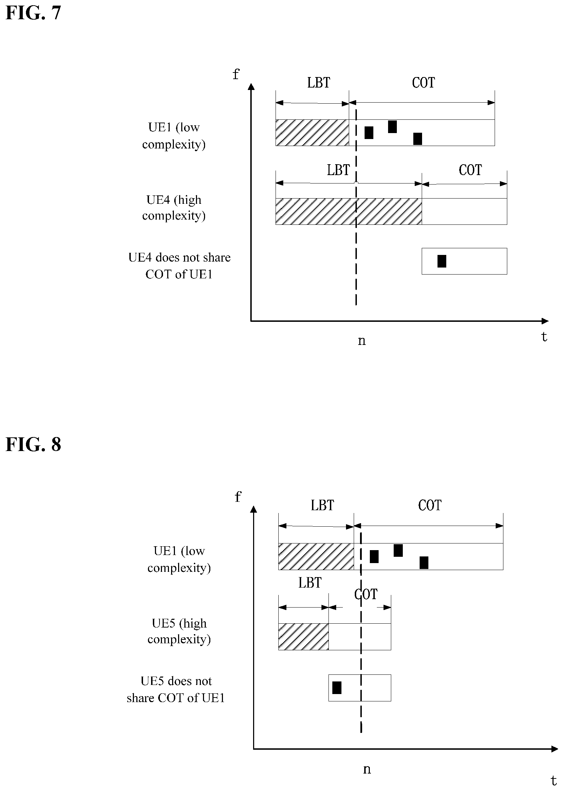

Figure 7 is a schematic diagram illustrating a situation in which UE4 does not share a COT of UE1 according to an embodiment of the present disclosure. In Figure 7, UE1 is user equipment that transmits COT sharing information, and UE4 is user equipment that receives the COT sharing information. As shown in Figure 7, at time instant n, UE4 receives the COT sharing information from UE1. At this time, UE4 is performing an LBT process and has not obtained a COT. UE4 determines that complexity of the channel detection process of UE4 is higher than complexity of a channel detection process of UE1, and therefore it is not possible to share the COT of UE1.

For example, the sharing determination unit 420 may determine not to share the COT of the other user equipment in a case where the complexity of the channel detection process of the user equipment 400 is higher than or equal to the complexity of the channel detection process of the other user equipment, and an end time of the COT of the user equipment 400 is earlier than an end time of the COT of the other user equipment.

Figure 8 is a schematic diagram illustrating a situation in which UE5 does not share a COT of UE1 according to an embodiment of the present disclosure. In Figure 8, UE1 is user equipment that transmits COT sharing information, and UE5 is user equipment that receives the COT sharing information. As shown in Figure 8, at time instant n, UE5 receives the COT sharing information from UE1. At this time, UE5 has finished an LBT process and obtained a COT. UE5 determines that complexity of the channel detection process of UE5 is higher than complexity of a channel detection process of UE1, and therefore does not share the COT of UE1 even if an end time of the COT of UE1 is later.

According to an embodiment of the present disclosure, the sharing determination unit 420 may determine to share the COT of the other user equipment in a case where the complexity of the channel detection process of the user equipment 400 is higher than or equal to the complexity of the channel detection process of the other user equipment, and an end time of the COT of the user equipment 400 is earlier than an end time of the COT of the other user equipment. In this way, it is avoided that the COT of the user equipment 400 is too short and appropriate resources cannot be selected within the COT of the user equipment 400. In this case, the sharing determination unit 420 may determine a size of the resource selection window according to the COT of the other user equipment and the COT of the user equipment 400. Specifically, the user equipment 400 may merge the COT of the other user equipment and the COT of the user equipment 400 and then determine the size of the resource selection window. In other words, the user equipment 400 may extend a length of the resource selection window according to the COT of the other user equipment.

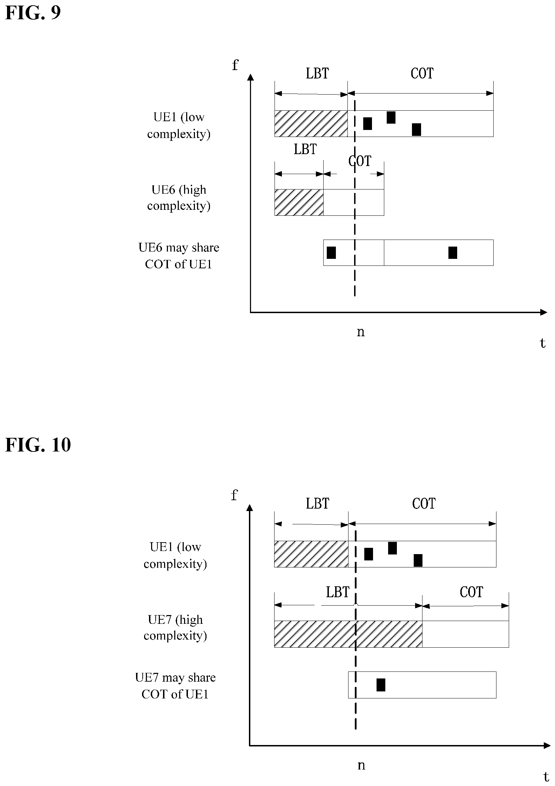

Figure 9 is a schematic diagram illustrating a situation in which UE6 shares a COT of UE1 according to an embodiment of the present disclosure. In Figure 9, UE1 is user equipment that transmits COT sharing information, and UE6 is user equipment that receives the COT sharing information. As shown in Figure 9, at time instant n, UE6 receives the COT sharing information from UE1. At this time, UE6 has finished an LBT process and obtained a COT. UE6 determines that complexity of the channel detection process of UE6 is higher than complexity of a channel detection process of UE1, and sharing the COT of UE1 can obtain a longer COT and thereby more appropriate resources can be selected. Therefore it is possible to share the COT of UE1. That is, UE6 extends a size of a resource selection window according to the COT of UE1 and selects resources in the resource selection window. As shown in Figure 9, two black areas show resources selected by UE6, where a first resource is located in the COT of UE6, and a second source is located in the COT of UE1. In a case where UE6 does not share the COT of UE1, UE3 cannot select the second resource.

According to an embodiment of the present disclosure, the sharing determination unit 420 may determine to share the COT of the other user equipment in a case where the complexity of the channel detection process of the user equipment 400 is higher than or equal to the complexity of the channel detection process of the other user equipment, and the user equipment 400 has not obtained a COT. For example, although the complexity of the channel detection process of the user equipment 400 is higher, the user equipment 400 has not obtained a COT and has urgent data to transmit. In this case, the user equipment 400 may share the COT of another user equipment to select resources quickly. In this case, the user equipment 400 may determine a size of a resource selection window according to the COT of the other user equipment without using the COT of the user equipment 400.

Figure 10 is a schematic diagram illustrating a situation in which UE7 shares a COT of UE1 according to an embodiment of the present disclosure. In Figure 10, UE1 is user equipment that transmits COT sharing information, and UE7 is user equipment that receives the COT sharing information. As shown in Figure 10, at time instant n, UE7 receives the COT sharing information from UE1. At this time, UE7 is performing an LBT process and has not obtained a COT. UE7 determines that complexity of the channel detection process of UE7 is higher than complexity of a channel detection process of UE1, and there is data to be sent urgently. Therefore, it is possible to share the COT of UE1. That is, UE7 determines a size of a resource selection window according to the COT of UE1 and selects resources in the resource selection window. As shown in Figure 10, a black area shows a resource selected by UE7, which is located in the LBT process of UE7. In a case where UE7 does not share the COT of UE1, UE2 cannot select the resources.

Examples in which the user equipment 400 shares the COT of the other user equipment or does not share the COT of the other user equipment are described above in a non-limiting manner. The present disclosure is not limited to these embodiments. The sharing determination unit 420 may determine whether to share the COT of the other user equipment according to an actual situation. In a case where it is determined to share the COT of the other user equipment, the sharing determination unit 420 may further determine a sharing method: using only the COT of the other user equipment, regardless of the COT of the user equipment 400; using both the COT of the other user equipment and the COT of the user equipment 400.

According to an embodiment of the present disclosure, as shown in Figure 4, the user equipment 400 may further include a window determination unit 430, which is configured to determine a size of a resource selection window.

According to an embodiment of the present disclosure, in a case where the sharing determination unit 420 determines not to share the COT of the other user equipment, the window determination unit 430 may determine a size of the resource selection window according to the COT of the user equipment 400.

According to an embodiment of the present disclosure, after the sharing determination unit 420 determines to share the COT of the other user equipment and determines a sharing method, the window determination unit 430 may determine a size of the resource selection window according to the sharing method. Here, the window determination unit 430 may determine a start time and an end time of the resource selection window. In addition, the start time and the end time of the resource selection window may be expressed as time differences from a time instant at which the COT sharing information is received.

According to an embodiment of the present disclosure, in a case where the sharing determination unit 420 determines to use only the COT of the other user equipment regardless of the COT of the user equipment 400 (for example, the embodiments as shown in Figure 5 and Figure 10), the window determination unit 430 may determine a location of the resource selection window in a time domain according to the location of the COT of the other user equipment in the time domain, the time for decoding the COT sharing information by the user equipment 400, and a PDB (Packet Delay Budget) of the user equipment.

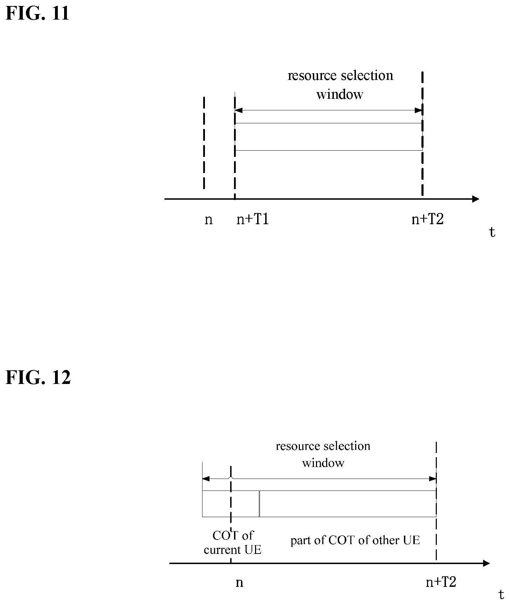

Figure 11 is a schematic diagram illustrating a process of determining a resource selection window according to an embodiment of the present disclosure. As shown in Figure 11, n represents a time instant when the COT sharing information is received, n+T1 represents the start time of the resource selection window, and n+T2 represents the end time of the resource selection window.

Specifically, the window determination unit 430 may determine a start time of the resource selection window according to a maximum value from the time for decoding the COT sharing information by the user equipment 400 and a start time of the COT of the other user equipment. Here, in a case where the COT sharing information is included in the SCI, the time for decoding the SCI by the user equipment 400 is represented as $T_{proc\_1}$, which indicates a time for the user equipment 400 to decode and process the SCI; the start time of the COT of the other user equipment is represented as $COT_{start}$. The window determination unit 430 may determine a difference T1 between the start time of the resource selection window and the time instant n when the COT sharing information is received as:

$$T1 = \max[T_{proc\_1}, COT_{start}]$$

That is, the resource selection window needs to be within the COT of the other user equipment and meet a requirement of the user equipment 400 for decoding and processing the COT sharing information. Here, T1 may be equal to a maximum value from $T_{proc\_1}$ and $COT_{start}$, that is, the resource selection window may start as early as possible within the COT of the other user equipment while meeting the requirement for decoding.

Specifically, the window determination unit 430 may determine an end time of the resource selection window according to a minimum value from the PDB of the user equipment 400 and an end time of the COT of the other user equipment. Here, the PDB of the user equipment 400 indicates a maximum allowable delay for data of the user equipment 400, and the end time of the COT of the other user equipment is represented as $COT_{end}$. As such, the window determination unit 430 may determine a difference T2 between the end time of the resource selection window and the time instant n when the COT sharing information is received as:

$$T2 \leq \min[PDB, COT_{end}]$$

That is, the resource selection window needs to be within the COT of the other user equipment and meet a delay requirement of data transmission of the user equipment 400. Here, T2 may be less than the minimum value from the PDB and the $COT_{end}$, that is, the user equipment 400 may not occupy an entire length of the COT of the other user equipment.

According to an embodiment of the present disclosure, in a case where the sharing determination unit 420 determines to use both the COT of the other user equipment and the COT of the user equipment 400 (for example, the embodiments as shown in Figure 6 and Figure 9), the window determination unit 430 may determine a location of the resource selection window in a time domain according to the location of the COT of the other user equipment in the time domain, a location of the COT of the user equipment 400 in the time domain, and the PDB of the user equipment.

Figure 12 is a schematic diagram illustrating a process of determining a resource selection window according to another embodiment of the present disclosure. As shown in Figure 12, n represents a time instant when the COT sharing information is received, and n+T2 represents the end time of the resource selection window.

In this case, since the COT of the user equipment 400 has already started and the end time of the resource selection window is extended only based on the COT of the other user equipment, the window determination unit 430 may determine the start time of the resource selection window to be the start time of the COT of the user equipment 400.

Further, the window determination unit 430 may determine the end time of the resource selection window according to a minimum value from the PDB of the user equipment 400 and an end time of the COT of the other user equipment, which is similar to the embodiment of determining an end time of the resource selection window described above. That is, the window determination unit 430 may determine a difference T2 between the end time of the resource selection window and the time instant n when the COT sharing information is received as:

$$T2 \leq \min[PDB, COT_{end}]$$

That is, the resource selection window needs to be within the COT of the other user equipment and meet a delay requirement of data transmission of the user equipment 400. Here, T2 may be less than the minimum value from the PDB and the $COT_{end}$, that is, the user equipment 400 may not occupy an entire length of the COT of the other user equipment.

According to an embodiment of the present disclosure, as shown in Figure 4, the user equipment 400 may further include a resource selection unit 440, which is configured to select resources in a resource selection window after a location of the resource selection window is determined by the window determination unit 430. Here, the resource selection unit 440 may select resources other than resources occupied by the other user equipment from the resource selection window.

According to an embodiment of the present disclosure, the COT sharing information received by the user equipment 400 may further include frequency domain resources at which the channel detection process of the other user equipment is targeted. For example, identification information of a sub channel may be used to represent frequency domain resources.

Further, the sharing determination unit 420 may further determine whether the frequency domain resources at which the channel detection process of the other user equipment is targeted belong to the unlicensed frequency domain resources configured for the user equipment 400. Here, the unlicensed frequency domain resources may include one or more unlicensed sub-channels. In other words, the user equipment 400 may be pre-configured with one or more unlicensed sub-channels. Thereby, the configured unlicensed sub-channel is used by performing the channel detection process on the configured sub-channel(s). According to an embodiment of the present disclosure, the user equipment 400 may be pre-configured with unlicensed frequency domain resources by network side equipment such as base station equipment, or a pre-configuration process may be performed before the user equipment 400 is delivered from a factory. The sharing determination unit 420 determines whether to share the COT of the other user equipment in a case where unlicensed frequency domain resources configured for the user equipment 400 includes the frequency domain resources at which the channel detection process of the other user equipment is targeted. That is, the COT cannot be shared in a case where the user equipment 400 does not support the frequency domain resources targeted by the COT of the other user equipment.

According to an embodiment of the present disclosure, the user equipment 400 may receive the COT sharing information through first stage SCI. For example, the user equipment 400 may: determine the location of the COT in the time domain according to a COT field in the first stage SCI: determine the type of the channel detection process according to a type field of the channel detection process in the first stage SCI; and determine the frequency domain resources at which the channel detection process is targeted according to a field of frequency domain resources at which the channel detection process is targeted in the first stage SCI.

As mentioned above, with the user equipment 400 according to the embodiment of the present disclosure, the COT sharing information can be received from the other user equipment, where the COT sharing information includes the type of the channel detection process of the other user equipment. Thereby, the user equipment can determine whether to share the received COT according to the type of the channel detection process. In this way, the COT can be shared between different user equipment under an appropriate circumstance, and therefore a resource utilization can be improved.

According to an embodiment of the present disclosure, the user equipment 100, when serving as receiver user equipment of a sidelink, may establish a PC5 RRC connection with transmitter user equipment of the sidelink.

According to an embodiment of the present disclosure, as shown in Figure 4, the user equipment 400 may further include a generation unit 450, which is configured to generate channel detection auxiliary information. The user equipment 400 may transmit the channel detection auxiliary information generated by the generation unit 450 to the transmitter user equipment through the communication unit 410.

According to an embodiment of the present disclosure, the channel detection auxiliary information may include frequency domain resources at which a channel detection process is targeted and which is recommended by the user equipment 400. Here, the user equipment 400 may determine the recommended frequency domain resources at which a channel detection process is targeted, according to the unlicensed frequency domain resources configured for the user equipment 400. For example, the user equipment 400 may obtain the unlicensed frequency domain resources configured for the transmitter user equipment through an interaction with the transmitter user equipment, and thereby select frequency domain resources that belong to both unlicensed frequency domain resources configured for the transmitter user equipment and unlicensed frequency domain resources configured for the user equipment 400 as recommended frequency domain resources. That is, the user equipment 400 may suggest that the transmitter user equipment perform the channel detection process on frequency domain resources supported by the user equipment 400, and thus overhead caused by the channel detection process may be reduced.

According to an embodiment of the present disclosure, the channel detection auxiliary information may include resource occupancy information on unlicensed frequency domain resources configured for the transmitter user equipment. The resource occupancy information may include a frequency-domain location of occupied resources on the unlicensed frequency domain resources configured for the transmitter user equipment. Here, the user equipment 400 may determine the resource occupation information according to a historical result of the channel detection process of the user equipment 400. That is, the user equipment 400 may determine which resources among the unlicensed frequency domain resources configured for the transmitter user equipment are occupied, according to a historical result of the channel detection process in a recent time period. Here, since the transmitter user equipment perform the channel detection process only on the unlicensed frequency domain resources configured for the transmitter user equipment, the user equipment 400 only needs to determine resource occupation on the unlicensed frequency domain resources configured for the transmitter user equipment.

As mentioned above, the channel detection auxiliary information may include one or more of frequency domain resources recommended by the user equipment 400 and resource occupancy information.

According to an embodiment of the present disclosure, the user equipment 400 may actively transmit channel detection auxiliary information to transmitter user equipment after establishing a PC5 RRC connection with the transmitter user equipment.

According to an embodiment of the present disclosure, the user equipment 400 may receive request information from the transmitter user equipment through the communication unit 410, and generate and transmit channel detection auxiliary information in response to the request information.

According to an embodiment of the present disclosure, the request information may further include information on a data packet of the transmitter user equipment. For example, the information on the data packet of the transmitter user equipment may include one or more types of information including size, delay requirement, and priority of the data packet.

According to an embodiment of the present disclosure, as shown in Figure 4, the user equipment 400 may further include a channel detection unit 460 configured to perform a channel detection process on unlicensed frequency domain resources. The channel detection process includes, but is not limited to, an LBT process.

According to an embodiment of the present disclosure, in a case where the request information received by the user equipment 400 includes the information on the data packet, the channel detection unit 460 may perform the channel detection process according to the information on the data packet. Further, the user equipment 400 may perform the channel detection process on only frequency domain resources that belong to both the unlicensed frequency domain resources configured for the transmitter user equipment and the unlicensed frequency domain resources configured for the user equipment 400. According to an embodiment of the present disclosure, in a case where an idle sub-channel is detected in the channel detection process performed by the channel detection unit 130, a right to use the sub-channel for a period of time can be obtain, and a resource selection window is determined.

According to an embodiment of the present disclosure, the resource selection unit 440 may select resources from the resource selection window according to a result of the channel detection process, to determined recommended resources. That is, the user equipment 400 may perform the channel detection process and select resources on behalf of the transmitter user equipment according to the information on the data packet of the transmitter user equipment. In this way, overhead due to resource selection of the transmitter user equipment can be saved, and a reliability of the selected resources can be improved.

According to an embodiment of the present disclosure, the generation unit 450, when generating the channel detection auxiliary information, may include the recommended resources in the channel detection auxiliary information. The user equipment 400 may transmit the channel detection auxiliary information to the transmitter user equipment through the communication unit 410.

According to an embodiment of the present disclosure, the user equipment 400 may transmit the channel detection auxiliary information through second stage SCI or MAC CE.

As described above, according to an embodiment of the present disclosure, in a case where the user equipment 400 serves as receiver user equipment in a sidelink, the user equipment 400 may transmit the channel detection auxiliary information to the transmitter user equipment. The channel detection auxiliary information includes one or more pieces of the following information: recommended frequency domain resources at which the channel detection process is targeted, resources occupancy information, and recommended resources to select. In this way, the transmitter user equipment can perform the channel detection process and/or select resources according to the channel detection auxiliary information, and therefore a reliability of transmission on an unlicensed spectrum can be improved and overhead due to resource selection can be reduced. That is, the user equipment 400 may assist the transmitter user equipment to perform channel detection and/or resource selection.

As mentioned above, with the user equipment 400 according to the embodiment of the present disclosure, the COT sharing information can be received from the other user equipment, where the COT sharing information includes the type of the channel detection process of the other user equipment. Thereby, the user equipment can determine whether to share the received COT according to the type of the channel detection process. In this way, the COT can be shared between different user equipment under an appropriate circumstance, and therefore a resource utilization can be improved. In addition, in a case where the user equipment 400 serves as receiver user equipment in a sidelink, the user equipment 400 may transmit the channel detection auxiliary information to the transmitter user equipment, so that the transmitter user equipment can perform the channel detection process and/or select resources according to the channel detection auxiliary information. In this way, a reliability of transmission on the unlicensed spectrum can be improved and overhead caused by resource selection can be reduced.

The user equipment 100 according to an embodiment of the present disclosure may be user equipment that transmits the COT sharing information, and the user equipment 400 may be user equipment that receives the COT sharing information. In addition, the user equipment 100 may be transmitter user equipment in a sidelink, and the user equipment 400 may be receiver user equipment in the sidelink. Therefore, the user equipment 100 and the user equipment 400 are respectively described above in a stand-alone manner. The user equipment 100 can also receive the COT sharing information from the other user equipment, and the user equipment 400 can also transmit the COT sharing information to the other user equipment. The user equipment 100 can also serve as receiver user equipment of the sidelink, and the user equipment 400 can also serve as transmitter user equipment of the sidelink. That is, the user equipment 400 may have the functions of the user equipment 100, and the user equipment 100 may have the functions of the user equipment 400. In other words, the user equipment according to the embodiment of the present disclosure may be equipped with all or part of the various units of the user equipment 100, or may be equipped with all or part of the various units of the user equipment 400.

<4. Signaling interaction process>

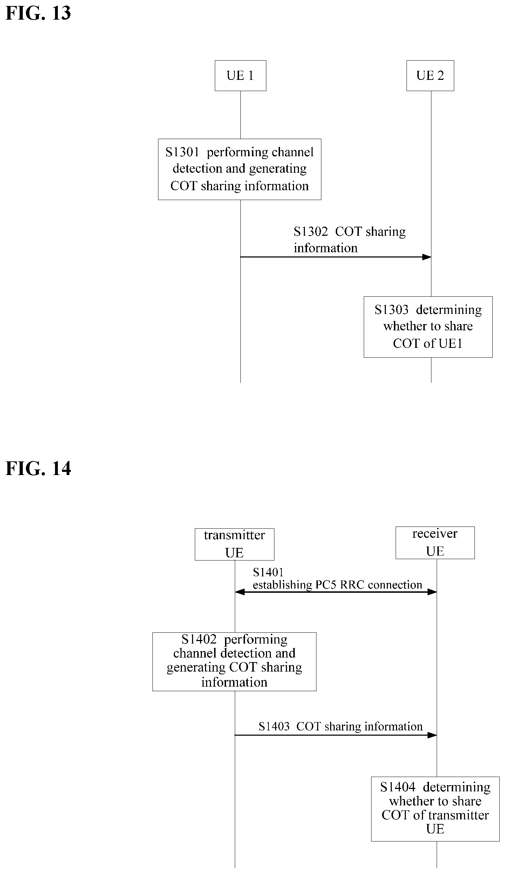

Signaling flow charts of a process of sharing COT between UEs and a process of cooperation between UEs for channel detection and resource selection according to embodiments of the present disclosure are described below with reference to Figure 13 to Figure 18.

Figure 13 is a signaling flow chart illustrating a process of sharing a COT between UEs according to an embodiment of the present disclosure. In Figure 13, UE1 may be implemented by user equipment 100, and UE2 may be implemented by user equipment 400. In step S1301, UE1 performs a channel detection process and generates COT sharing information. In step S1302, UE1 broadcasts and transmits the COT sharing information, so that UE2 receives the COT sharing information. In step S1303, UE2 determines whether to share the COT of UE1 according to a type of the channel detection process of UE1 in the COT sharing information.

Figure 14 is a signaling flow chart illustrating a process of sharing a COT between a transmitter UE and a receiver UE according to an embodiment of the present disclosure. In Figure 14, transmitter UE may be implemented by user equipment 100, and receiver UE may be implemented by user equipment 400. In step S1401, a PC5 RRC connection is established between the transmitter UE and the receiver UE. In step S 1402, the transmitter UE performs a channel detection process and generates COT sharing information. In step S1403, the transmitter UE broadcasts and transmits the COT sharing information, so that the receiver UE receives the COT sharing information. In step S1404, the receiver UE determines whether to share the COT of the transmitter UE according to a type of the channel detection process of the transmitter UE in the COT sharing information.

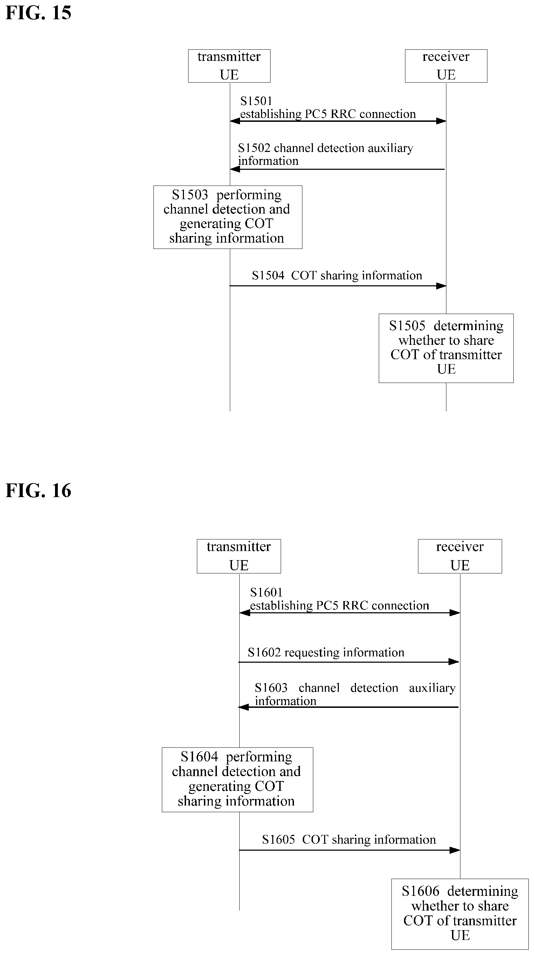

Figure 15 is a signaling flow chart illustrating a process of providing channel detection auxiliary information from a receiver UE to a transmitter UE according to an embodiment of the present disclosure. In Figure 15, transmitter UE may be implemented by user equipment 100, and receiver UE may be implemented by user equipment 400. In step S1501, a PC5 RRC connection is established between the transmitter UE and the receiver UE. In step S1502, in response to establishment of the PC5 RRC connection, the receiver UE generates and transmits channel detection auxiliary information to the transmitter UE. In step S1503, the transmitter UE performs a channel detection process and/or selects resources according to the channel detection auxiliary information, and generates COT sharing information. In step S1504, the transmitter UE broadcasts and transmits the COT sharing information, so that the receiver UE receives the COT sharing information. In step S 1505, the receiver UE determines whether to share the COT of the transmitter UE according to a type of the channel detection process of the transmitter UE in the COT sharing information.

Figure 16 is a signaling flow chart illustrating a process of providing channel detection auxiliary information from a receiver UE to a transmitter UE according to an embodiment of the present disclosure. In Figure 16, transmitter UE may be implemented by user equipment 100, and receiver UE may be implemented by user equipment 400. In step S1601, a PC5 RRC connection is established between the transmitter UE and the receiver UE. In step S1602, the transmitter UE transmits request information to the receiver UE to request channel detection auxiliary information. In step S1603, in response to reception of the request information, the receiver UE generates and transmits the channel detection auxiliary information to the transmitter UE. In step S1604, the transmitter UE performs a channel detection process and/or selects resources according to the channel detection auxiliary information, and generates COT sharing information. In step S1605, the transmitter UE broadcasts and transmits the COT sharing information, so that the receiver UE receives the COT sharing information. In step S1606, the receiver UE determines whether to share the COT of the transmitter UE according to a type of the channel detection process of the transmitter UE in the COT sharing information.

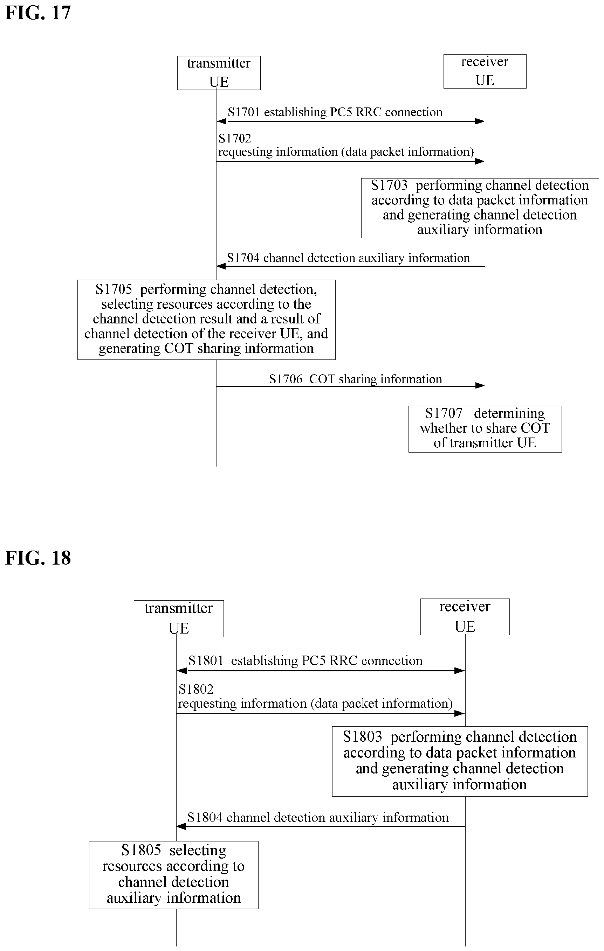

Figure 17 is a signaling flow chart illustrating a process of providing channel detection auxiliary information from a receiver UE to a transmitter UE according to an embodiment of the present disclosure. In Figure 17, transmitter UE may be implemented by user equipment 100, and receiver UE may be implemented by user equipment 400. In step S1701, a PC5 RRC connection is established between the transmitter UE and the receiver UE. In step S1702, the transmitter UE transmits request information including information on a data packet to the receiver UE to request channel detection auxiliary information. In step S1703, in response to reception of the request information, the receiver UE performs a channel detection process according to the information on a data packet and generates channel detection auxiliary information, which includes a result of the channel detection process, i.e., recommended resources. In step S1704, the receiver UE transmits the channel detection auxiliary information to the transmitter UE. In step S1705, the transmitter UE performs a channel detection process according to the channel detection auxiliary information, selects resources according to the result of the channel detection process of the transmitter UE and the result of the channel detection process of the receiver UE, and generates COT sharing information. In step S1706, the transmitter UE broadcasts and transmits the COT sharing information, so that the receiver UE receives the COT sharing information. In step S 1707, the receiver UE determines whether to share the COT of the transmitter UE according to a type of the channel detection process of the transmitter UE in the COT sharing information.

Figure 18 is a signaling flow chart illustrating a process of providing channel detection auxiliary information from a receiver UE to a transmitter UE according to an embodiment of the present disclosure. In Figure 18, transmitter UE may be implemented by user equipment 100, and receiver UE may be implemented by user equipment 400. In step S1801, a PC5 RRC connection is established between the transmitter UE and the receiver UE. In step S1802, the transmitter UE transmits request information including information on a data packet to the receiver UE to request channel detection auxiliary information. In step S1803, in response to reception of the request information, the receiver UE performs a channel detection process according to the information on a data packet and generates channel detection auxiliary information, which includes the recommended resources. In step S1804, the receiver UE transmits the channel detection auxiliary information to the transmitter UE. In step S1805, the transmitter UE selects resources according to the recommended resources from the receiver UE directly, without performing a channel detection process.

<5. Method embodiment>

Next, a wireless communication method performed by user equipment 100 in a wireless communication system according to an embodiment of the present disclosure is described in detail.

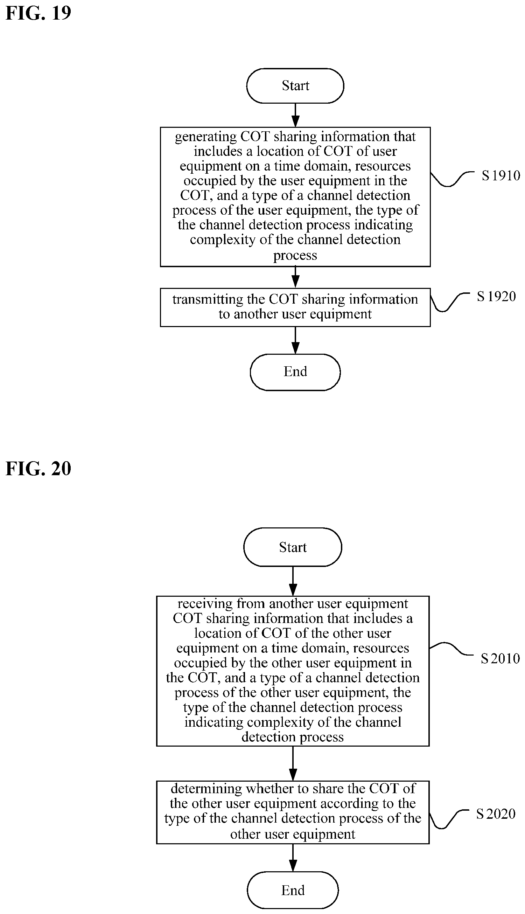

Figure 19 is a flowchart illustrating a wireless communication method performed by user equipment 100 in a wireless communication system according to an embodiment of the present disclosure.

As shown in Figure 19, in step S1910, COT sharing information is generated. The COT sharing information includes a location of a COT of the user equipment 100 in a time domain, resources occupied by user equipment 100 in the COT, and a type of a channel detection process of the user equipment 100. Here, the type of the channel detection process indicates complexity of the channel detection process.

In step S 1920, the COT sharing information is sent to another user equipment.

Preferably, the COT sharing information further includes frequency domain resources at which the channel detection process of the user equipment 100 is targeted.

Preferably, the step of transmitting the COT sharing information to another user equipment includes transmitting the COT sharing information through first stage SCI.

Preferably, the user equipment 100 serves as transmitter user equipment for a sidelink, and the wireless communication method further includes receiving channel detection auxiliary information from receiver user equipment for the sidelink. The channel detection auxiliary information includes frequency domain resources at which a channel detection process is targeted and which is recommended by the receiver user equipment, and/or resource occupy information on unlicensed frequency domain resources configured for the transmitter user equipment. The wireless communication method further includes performing a channel detection process according to the channel detection auxiliary information, and selecting resources according to the channel detection process.

Preferably, the step of performing a channel detection process includes performing the channel detection process on the frequency domain resources recommended by the receiver user equipment.

Preferably, the step of selecting resources includes selecting, within a COT obtained through the channel detection process, unoccupied resources determined according to the resource occupy information.

Preferably, the wireless communication method further includes transmitting request information for requesting the channel detection auxiliary information to the receiver user equipment.

Preferably, the request information includes information on a data packet of the transmitter user equipment.

Preferably, the channel detection auxiliary information further includes a result of a channel detection process of the receiver user equipment, and the step of selecting resources further includes selecting resources according to the result of the channel detection process of the receiver user equipment and the result of the channel detection process of the transmitter user equipment.

Preferably, the step of receiving the channel detection auxiliary information includes receiving the channel detection auxiliary information through second stage SCI or MAC CE.

According to an embodiment of the present disclosure, a subject that performs the method may be the user equipment 100 according to the embodiment of the present disclosure. Therefore, the previous embodiments of the user equipment 100 are applicable here.

Next, a wireless communication method performed by user equipment 400 in a wireless communication system according to an embodiment of the present disclosure is described in detail.

Figure 20 is a flowchart illustrating a wireless communication method performed by user equipment 400 in a wireless communication system according to an embodiment of the present disclosure.

As shown in Figure 20, in step S2010, COT sharing information is received from another user equipment. The COT sharing information includes a location of a COT of the other user equipment in a time domain, resources occupied by the other user equipment in the COT, and a type of a channel detection process of the other user equipment. Here, the type of the channel detection process indicates complexity of the channel detection process.

In step S2020, it is determined whether to share the COT of the other user equipment according to the type of the channel detection process of the other user equipment.

Preferably, the step of determining whether to share the COT of the other user equipment includes determining to share the COT of the other user equipment in a case where complexity of a channel detection process of the user equipment 400 is lower than complexity of a channel detection process of the other user equipment.

Preferably, the step of determining whether to share the COT of the other user equipment includes determining not to share the COT of the other user equipment in a case where complexity of a channel detection process of the user equipment 400 is higher than or equal to complexity of a channel detection process of the other user equipment.

Preferably, the step of determining whether to share the COT of the other user equipment includes determining to share the COT of the other user equipment in a case where complexity of a channel detection process of the user equipment 400 is higher than or equal to complexity of a channel detection process of the other user equipment and an end time of the COT of the user equipment 400 is earlier than an end time of the COT of the other user equipment.

Preferably, the step of sharing the COT of the other user equipment includes determining a location of a resource selection window in the time domain according to the location of the COT of the other user equipment in the time domain, a location of the COT of the user equipment 400 in the time domain, and a PDB of the user equipment 400; and selecting resources in the resource selection window.

Preferably, the step of determining a location of a resource selection window in the time domain includes determining a start time of the resource selection window to be a start time of the COT of the user equipment 400, and determining an end time of the resource selection window to be not later than a minimum value from the PDB of the user equipment 400 and an end time of the COT of the other user equipment.

Preferably, the step of determining whether to share the COT of the other user equipment includes determining to share the COT of the other user equipment in a case where complexity of a channel detection process of the user equipment 400 is higher than or equal to complexity of a channel detection process of the other user equipment and the user equipment 400 has not obtained the COT.

Preferably, the step of sharing the COT of the other user equipment includes determining a location of a resource selection window in the time domain according to the location of the COT of the other user equipment in the time domain, a time for decoding the COT sharing information by the user equipment 400, and a PDB of the user equipment 400; and selecting resources in the resource selection window.

Preferably, the step of determining a location of a resource selection window in the time domain includes determining a start time of the resource selection window to be a maximum value from the time for decoding the COT sharing information by the user equipment 400 and a start time of the COT of the other user equipment, and determining an end time of the resource selection window to be not later than a minimum value from the PDB of the user equipment 400 and an end time of the COT of the other user equipment.

Preferably, the COT sharing information further includes frequency domain resources at which the channel detection process of the other user equipment is targeted, and the wireless communication method further includes: determining whether to share the COT of the other user equipment according to the type of the channel detection process of the other user equipment, in a case where unlicensed frequency domain resources configured for the user equipment 400 includes the frequency domain resources at which the channel detection process of the other user equipment is targeted.

Preferably, the step of receiving the COT sharing information includes receiving the COT sharing information through first stage SCI.

Preferably, the user equipment 400 serves as receiver user equipment for a sidelink, and the wireless communication method further includes: generating channel detection auxiliary information including frequency domain resources at which a channel detection process is targeted and which is recommended by the receiver user equipment, and/or resource occupy information on unlicensed frequency domain resources configured for the transmitter user equipment for the sidelink; and transmitting the channel detection auxiliary information to the transmitter user equipment.

Preferably, the wireless communication method further includes: determining the recommended frequency domain resources at which a channel detection process is targeted, according to the unlicensed frequency domain resources configured for the receiver user equipment.

Preferably, the resource occupation information is determined according to a historical result of the channel detection process of the receiver user equipment.

Preferably, the wireless communication method further includes: receiving request information from the transmitter user equipment; and generating the channel detection auxiliary information in response to the request information.

Preferably, the request information includes information on a data packet of the transmitter user equipment.

Preferably, the wireless communication method further includes: performing the channel detection process according to the information on the data packet; determining the recommended resources according to a result of the channel detection process; and including the recommended resources in the channel detection auxiliary information.

Preferably, the step of transmitting the channel detection auxiliary information includes transmitting the channel detection auxiliary information through second stage SCI or MAC CE.

According to an embodiment of the present disclosure, a subject that performs the method may be the user equipment 400 according to the embodiment of the present disclosure. Therefore, the previous embodiments of the user equipment 400 are applicable here.

<6. Application example>

The technology of the present disclosure can be applied to various products. For example, the user equipment may be implemented as a mobile terminal (such as smart phone, tablet personal computer (PC), notebook PC, portable game terminal, portable/dongle-type mobile router, and digital camera) or an vehicle-mounted terminal (such as automobile navigation device). The user equipment may be implemented as a terminal that performs machine-to-machine (M2M) communications (which is also referred to as machine type communication (MTC) terminal). Furthermore, the user equipment may be a wireless communication module (such as an integrated circuit module including a single wafer) installed on each user equipment described above.

(First Application Example)

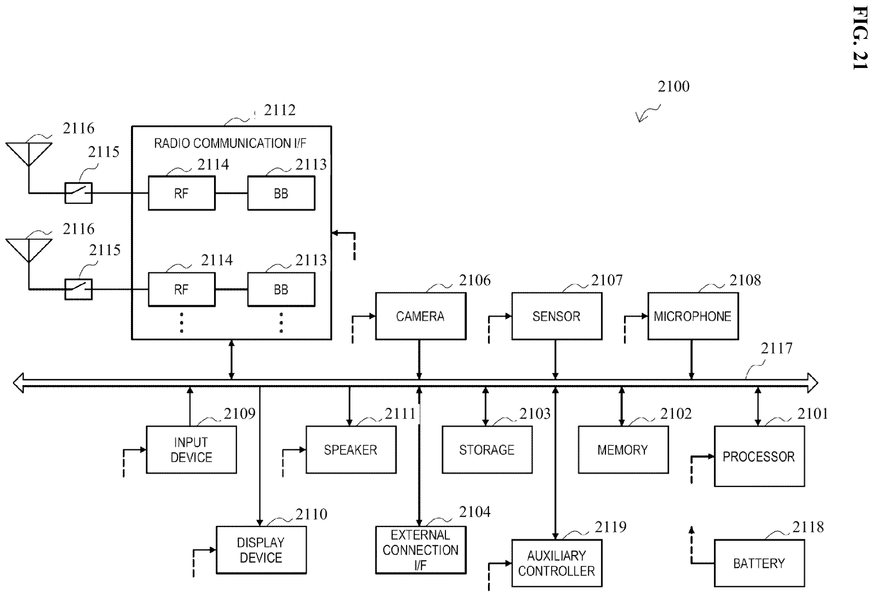

Figure 21 is a block diagram showing an example of a schematic configuration of a smart phone 2100 to which the technology of the present disclosure may be applied. The smart phone 2100 includes a processor 2101, a memory 2102, a storage 2103, an external connection interface 2104, a camera 2106, a sensor 2107, a microphone 2108, an input device 2109, a display device 2110, a speaker 2111, a radio communication interface 2112, one or more antenna switches 2115, one or more antennas 2116, a bus 2117, a battery 2118, and an auxiliary controller 2119.

The processor 2101 may be, for example, a CPU or a system on a chip (SoC), and controls the functions of the application layer and other layers of the smart phone 2100. The memory 2102 includes an RAM and an ROM, and stores data and programs executed by the processor 2101. The storage 2103 may include a storage medium such as semiconductor memory and hard disk. The external connection interface 2104 is an interface for connecting an external device (such as memory card and universal serial bus (USB) device) to the smart phone 2100.

The camera 2106 includes an image sensor (such as charge coupled device (CCD) and complementary metal oxide semiconductor (CMOS)), and generates a captured image. The sensor 2107 may include a set of sensors, such as a measurement sensor, a gyroscope sensor, a geomagnetic sensor, and an acceleration sensor. The microphone 2108 converts sound inputted to the smart phone 2100 into an audio signal. The input device 2109 includes, for example, a touch sensor configured to detect a touch on a screen of the display device 2110, a keypad, a keyboard, a button, or a switch, and receives an operation or information inputted from a user. The display device 2110 includes a screen such as liquid crystal display (LCD) or organic light emitting diode (OLED) display, and displays an output image of the smart phone 2100. The speaker 2111 converts the audio signal outputted from the smart phone 2100 into sound.

The radio communication interface 2112 supports any cellular communication scheme (such as LTE and LTE-Advanced), and performs wireless communications. The radio communication interface 2112 may generally include, for example, a BB processor 2113 and an RF circuit 2114. The BB processor 2113 may perform, for example, encoding/decoding, modulation/demodulation, and multiplexing/demultiplexing, and perform various types of signal processing for wireless communications. In addition, the RF circuit 2114 may include, for example, a mixer, a filter or an amplifier, and transmit and receive a wireless signal via the antenna 2116. The radio communication interface 2112 may be a chip module on which the BB processor 2113 and the RF circuit 2114 are integrated. As shown in Figure 21, the radio communication interface 2112 may include multiple BB processors 2113 and multiple RF circuits 2114. Although Figure 21 shows an example in which the radio communication interface 2112 includes multiple BB processors 2113 and multiple RF circuits 2114, the radio communication interface 2112 may include a single BB processor 2113 or a single RF circuit 2114.

In addition to the cellular communication scheme, the radio communication interface 2112 may support another type of wireless communication scheme, such as short-range wireless communication scheme, near field communication scheme, and wireless local area network (LAN) scheme. In this case, the radio communication interface 2112 may include a BB processor 2113 and an RF circuit 2114 for each wireless communication scheme.

Each of the antenna switches 2115 switches a connection destination of the antenna 2116 among multiple circuits (for example, circuits for different wireless communication schemes) included in the radio communication interface 2112.

Each of the antennas 2116 includes a single or multiple antenna elements (such as multiple antenna elements included in a MIMO antenna), and is configured for the radio communication interface 2112 to transmit and receive wireless signals. As shown in Figure 21, the smart phone 2100 may include multiple antennas 2116. Although Figure 21 shows an example in which the smart phone 2100 includes multiple antennas 2116, the smart phone 2100 may include a single antenna 2116.

In addition, the smart phone 2100 may include antenna(s) 2116 for each wireless communication scheme. In this case, the antenna switches 2115 may be omitted from the configuration of the smart phone 2100.

The processor 2101, the memory 2102, the storage 2103, the external connection interface 2104, the camera 2106, the sensor 2107, the microphone 2108, the input device 2109, the display device 2110, the speaker 2111, the radio communication interface 2112, and the auxiliary controller 2119 are connected to each other via the bus 2117. The battery 2118 supplies power to each block of the smart phone 2100 as shown in Figure 21 via a feeder line. The feeder line is partially shown as a dashed line in the figure. The auxiliary controller 2119 operates the least necessary function of the smart phone 2100 in a sleep mode, for example.

In the smart phone 2100 shown in Figure 21, the COT sharing information generation unit 110, the channel detection unit 130, the resource selection unit 140 and the request generation unit 150 described by using Figure 1, and the sharing determination unit 420, the window determination unit 430, the resource selection unit 440, the generation unit 450 and the channel detection unit 460 described by using Figure 4 may be implemented through the processor 2101 or the auxiliary controller 2119. At least part of the functions may be implemented by the processor 2101 or the auxiliary controller 2119. For example, the processor 2101 or the auxiliary controller 2119 may execute instructions stored in the memory 2102 or the storage device 2103 to perform functions of: generating COT sharing information, performing channel detection, selecting resources, generating the request for channel detection auxiliary information, determining whether to share the COT of another user equipment, determining the location of a resource selection window, and generating the channel detection auxiliary information.

(Second Application Example)

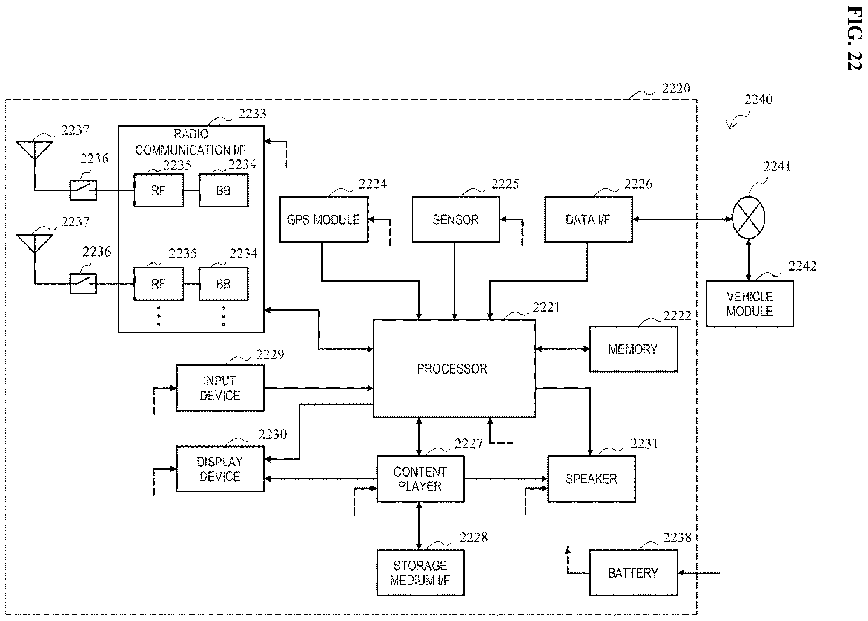

Figure 22 is a block diagram showing an example of a schematic configuration of an automobile navigation device 2220 to which the technology of the present disclosure may be applied. The automobile navigation device 2220 includes a processor 2221, a memory 2222, a global positioning system (GPS) module 2224, a sensor 2225, a data interface 2226, a content player 2227, a storage medium interface 2228, an input device 2229, a display device 2230, a speaker 2231, a radio communication interface 2233, one or more antenna switches 2236, one or more antennas 2237, and a battery 2238.

The processor 2221 may be for example CPU or SoC, and controls the navigation function of the automobile navigation device 2220 and other functions. The memory 2222 includes an RAM and an ROM, and stores data and programs executed by the processor 2221.

The GPS module 2224 measures a position (such as latitude, longitude, and altitude) of the automobile navigation device 2220 based on a GPS signal received from a GPS satellite. The sensor 2225 may include a set of sensors, such as a gyroscope sensor, a geomagnetic sensor, and an air pressure sensor. The data interface 2226 is connected to, for example, an in-vehicle network 2241 via a terminal not shown, and acquires data (such as vehicle speed data) generated by a vehicle.

The content player 2227 reproduces content stored in a storage medium (such as CD and DVD) inserted into the storage medium interface 2228. The input device 2229 includes, for example, a touch sensor configured to detect a touch on a screen of the display device 2230, a button, or a switch, and receives an operation or information inputted from the user. The display device 2230 includes a screen such as LCD or OLED display, and displays an image of a navigation function or reproduced content. The speaker 2231 outputs a sound of the navigation function or the reproduced content.

The radio communication interface 2233 supports any cellular communication scheme (such as LTE and LTE-Advanced), and performs wireless communications. The radio communication interface 2233 may generally include, for example, a BB processor 2234 and an RF circuit 2235. The BB processor 2234 may perform, for example, encoding/decoding, modulation/demodulation, and multiplexing/demultiplexing, and perform various types of signal processing for wireless communications. In addition, the RF circuit 2235 may include, for example, a mixer, a filter or an amplifier, and transmit and receive a wireless signal via the antenna 2237. The radio communication interface 2233 may be a chip module on which the BB processor 2234 and the RF circuit 2235 are integrated. As shown in Figure 22, the radio communication interface 2233 may include multiple BB processors 2234 and multiple RF circuits 2235. Although Figure 22 shows an example in which the radio communication interface 2233 includes multiple BB processors 2234 and multiple RF circuits 2235, the radio communication interface 2233 may include a single BB processor 2234 or a single RF circuit 2235.

In addition to the cellular communication scheme, the radio communication interface 2233 may support another type of wireless communication scheme, such as short-range wireless communication scheme, near field communication scheme, or wireless LAN scheme. In this case, the radio communication interface 2233 may include a BB processor 2234 and an RF circuit 2235 for each wireless communication scheme.

Each of the antenna switches 2236 switches a connection destination of the antenna 2237 among multiple circuits (such as circuits for different wireless communication schemes) included in the radio communication interface 2233.

Each of the antennas 2237 includes a single or multiple antenna elements (such as multiple antenna elements included in a MIMO antenna), and is configured for the radio communication interface 2233 to transmit and receive wireless signals. As shown in Figure 22, the automobile navigation device 2220 may include multiple antennas 2237. Although Figure 22 shows an example in which the vehicle navigation device 2220 includes multiple antennas 2237, the vehicle navigation device 2220 may include a single antenna 2237.

In addition, the automobile navigation device 2220 may include antenna(s) 2137 for each wireless communication scheme. In this case, the antenna switches 2236 may be omitted from the configuration of the automobile navigation device 2220.

The battery 2238 supplies power to blocks of the automobile navigation device 2220 shown in Figure 22 via a feeder line. The feeder line is partially shown as a dashed line in the figure. The battery 2238 accumulates electric power supplied from the vehicle.

In the vehicle navigation device 2220 shown in Figure 22, the COT sharing information generation unit 110, the channel detection unit 130, the resource selection unit 140 and the request generation unit 150 described by using Figure 1, and the sharing determination unit 420, the window determination unit 430, the resource selection unit 440, the generation unit 450 and the channel detection unit 460 described by using Figure 4 may be implemented through the processor 2221. At least part of the functions may be implemented by the processor 2221. For example, the processor 2221 may execute instructions stored in the memory 2222 to perform functions of: generating COT sharing information, performing channel detection, selecting resources, generating the request for channel detection auxiliary information, determining whether to share the COT of another user equipment, determining the location of a resource selection window, and generating the channel detection auxiliary information.

The technology of the present disclosure may also be implemented as an in-vehicle system (or vehicle) 2240 including the vehicle navigation device 2220, an in-vehicle network 2241, and one or more blocks of vehicle modules 2242. The vehicle modules 2242 generate vehicle data (such as vehicle speed, engine speed, and failure information), and outputs the generated data to the in-vehicle network 2241.

Preferred embodiments of the present disclosure are described above with reference to the drawings. However, the present disclosure is not limited to the above examples. Those skilled in the art may make various alternations and modifications within the scope of the appended claims. It should be understood that these alternations and modifications shall naturally fall within the technical scope of the present disclosure.

For example, units shown by a dotted line block in the functional block diagram shown in the drawings indicate that the functional units are optional in the corresponding device, and the optional functional units may be combined appropriately to achieve required functions.

For example, multiple functions implemented by one unit in the above embodiments may be implemented by separate apparatus. Alternatively, multiple functions implemented by multiple units in the above embodiments may be implemented by separate apparatus, respectively. In addition, one of the above functions may be implemented by multiple units. Such configurations are naturally included in the technical scope of the present disclosure.

In the specification, steps described in the flowchart include not only the processes performed chronologically as the described sequence, but also the processes performed in parallel or individually rather than chronologically. Furthermore, the steps performed chronologically may be performed in other order appropriately.

Although the embodiments of the present disclosure are described in detail above with reference to the accompanying drawings, it should be understood that the embodiments are only for explaining the present disclosure and do not limit the present disclosure. For those skilled in the art, various modifications and changes can be made to the embodiments without departing from the spirit and scope of the present disclosure. Therefore, the scope of the present disclosure is limited by only the appended claims and equivalents thereof.

**Claims**

1. User equipment, comprising processing circuitry configured to:

   generate Channel Occupy Time COT sharing information that comprises a location of a COT of the user equipment in a time domain, resources occupied by the user equipment in the COT, and a type of a channel detection process of the user equipment; and
   transmit the COT sharing information to another user equipment,
   wherein the type of the channel detection process indicates complexity of the channel detection process.

2. The user equipment according to claim 1, wherein the COT sharing information further comprises frequency domain resources at which the channel detection process of the user equipment is targeted.

3. The user equipment according to claim 1, wherein the processing circuitry is further configured to:
   transmit the COT sharing information through first stage Sidelink Control Information SCI.

4. The user equipment according to claim 1, wherein the user equipment serves as transmitter user equipment for a sidelink, and wherein the processing circuitry is further configured to:

   receive channel detection auxiliary information from receiver user equipment for the sidelink, the channel detection auxiliary information comprising frequency domain resources at which a channel detection process is targeted and which is recommended by the receiver user equipment, and/or resource occupy information on unlicensed frequency domain resources configured for the transmitter user equipment;
   perform a channel detection process according to the channel detection auxiliary information; and

select resources according to a result of the channel detection process.

5. The user equipment according to claim 4, wherein the processing circuitry is further configured to:

perform the channel detection process on the frequency domain resources recommended by the receiver user equipment; and/or
select, within a COT obtained through the channel detection process, unoccupied resources determined according to the resource occupy information.

6. The user equipment according to claim 4, wherein the processing circuitry is further configured to:
transmit request information for requesting the channel detection auxiliary information to the receiver user equipment.

7. The user equipment according to claim 6, wherein the request information comprises information on a data packet of the transmitter user equipment.

8. The user equipment according to claim 7, wherein the channel detection auxiliary information further comprises a result of a channel detection process of the receiver user equipment, and wherein
the processing circuitry is further configured to select resources according to the result of the channel detection process of the receiver user equipment and the result of the channel detection process of the transmitter user equipment.

9. The user equipment according to claim 4, wherein the processing circuitry is further configured to:
receive the channel detection auxiliary information through second stage Sidelink Control Information SCI or a Media Access Control MAC control element.

10. User equipment, comprising processing circuitry configured to:

receive, from another user equipment, Channel Occupy Time COT sharing information that comprises a location of a COT of the other user equipment in a time domain, resources occupied by the other user equipment in the COT, and a type of a channel detection process of the other user equipment; and
determine whether to share the COT of the other user equipment according to the type of the channel detection process of the other user equipment,
wherein the type of the channel detection process indicates complexity of the channel detection process.

11. The user equipment according to claim 10, wherein the processing circuitry is further configured to:
determine to share the COT of the other user equipment in a case where complexity of a channel detection process of the user equipment is lower than complexity of a channel detection process of the other user equipment.

12. The user equipment according to claim 10, wherein the processing circuitry is further configured to:
determine not to share the COT of the other user equipment in a case where complexity of a channel detection process of the user equipment is higher than or equal to complexity of a channel detection process of the other user equipment.

13. The user equipment according to claim 10, wherein the processing circuitry is further configured to:
determine to share the COT of the other user equipment, in a case where complexity of a channel detection process of the user equipment is higher than or equal to complexity of a channel detection process of the other user equipment and an end time of the COT of the user equipment is earlier than an end time of the COT of the other user equipment.

14. The user equipment according to claim 11 or 13, wherein the processing circuitry is further configured to:

determine a location of a resource selection window in the time domain according to the location of the COT of the other user equipment in the time domain, a location of the COT of the user equipment in the time domain, and a packet delay budget PDB of the user equipment; and select a resource in the resource selection window.

15. The user equipment according to claim 14, wherein the processing circuitry is further configured to:

determine a start time of the resource selection window according to a start time of the COT of the user equipment, and
determine an end time of the resource selection window according to a minimum value from the PDB of the user equipment and an end time of the COT of the other user equipment.

16. The user equipment according to claim 10, wherein the processing circuitry is further configured to:
determine to share the COT of the other user equipment, in a case where complexity of a channel detection process of the user equipment is higher than or equal to complexity of a channel detection process of the other user equipment and the user equipment has not obtained the COT.

**17.** The user equipment according to claim 11 or 16, wherein the processing circuitry is further configured to:

determine a location of a resource selection window in the time domain according to the location of the COT of the other user equipment in the time domain, a time for decoding the COT sharing information by the user equipment, and a packet delay budget PDB of the user equipment; and
select a resource in the resource selection window.

**18.** The user equipment according to claim 17, wherein the processing circuitry is further configured to:

determine a start time of the resource selection window according to a maximum value from the time for decoding the COT sharing information by the user equipment and a start time of the COT of the other user equipment, and
determine an end time of the resource selection window according to a minimum value from the PDB of the user equipment and an end time of the COT of the other user equipment.

**19.** The user equipment according to claim 10, wherein the COT sharing information further comprises frequency domain resources at which the channel detection process of the other user equipment is targeted, and wherein the processing circuitry is further configured to determine whether to share the COT of the other user equipment according to the type of the channel detection process of the other user equipment, in a case where unlicensed frequency domain resources configured for the user equipment comprises the frequency domain resources at which the channel detection process of the other user equipment is targeted.

**20.** The user equipment according to claim 10, wherein the processing circuitry is further configured to:
receive the COT sharing information through first stage Sidelink Control Information SCI.

**21.** The user equipment according to claim 10, wherein the user equipment serves as receiver user equipment for a sidelink, and wherein the processing circuitry is further configured to:

generate channel detection auxiliary information comprising frequency domain resources at which a channel detection process is targeted and which is recommended by the receiver user equipment, and/or resource occupy information on unlicensed frequency domain resources configured for the transmitter user equipment for the sidelink; and
transmit the channel detection auxiliary information to the transmitter user equipment.

**22.** The user equipment according to claim 21, wherein the processing circuitry is further configured to:

determine the recommended frequency domain resources at which a channel detection process is targeted, according to unlicensed frequency domain resources configured for the receiver user equipment; and/or
determine the resource occupation information according to a historical result of the channel detection process of the receiver user equipment.

**23.** The user equipment according to claim 21, wherein the processing circuitry is further configured to:

receive request information from the transmitter user equipment; and
generate the channel detection auxiliary information in response to the request information.

**24.** The user equipment according to claim 23, wherein the request information comprises information on a data packet of the transmitter user equipment.

**25.** The user equipment according to claim 24, wherein the processing circuitry is further configured to:

perform a channel detection process according to the information on the data packet;
determine the recommended resources according to a result of the channel detection process; and
include the recommended resources in the channel detection auxiliary information.

**26.** The user equipment according to claim 21, wherein the processing circuitry is further configured to:
transmit the channel detection auxiliary information through second stage Sidelink Control Information SCI or a Media Access Control MAC control element.

**27.** A wireless communication method performed by user equipment, comprising:

generating Channel Occupy Time COT sharing information that comprises a location of a COT of the user equipment in a time domain, resources occupied by the user equipment in the COT, and a type of a channel detection process of the user equipment; and
transmitting the COT sharing information to another user equipment,

wherein the type of the channel detection process indicates complexity of the channel detection process.

28. The wireless communication method according to claim 27, wherein the COT sharing information further comprises frequency domain resources at which the channel detection process of the user equipment is targeted.

29. The wireless communication method according to claim 27, wherein the step of transmitting the COT sharing information to another user equipment comprises:
transmitting the COT sharing information through first stage Sidelink Control Information SCI.

30. The wireless communication method according to claim 27, wherein the user equipment serves as transmitter user equipment for a sidelink, and the wireless communication method further comprises:

receiving channel detection auxiliary information from receiver user equipment for the sidelink, the channel detection auxiliary information comprising frequency domain resources at which a channel detection process is targeted and which is recommended by the receiver user equipment, and/or resource occupy information on unlicensed frequency domain resources configured for the transmitter user equipment;
performing a channel detection process according to the channel detection auxiliary information; and
selecting resources according to a result of the channel detection process.

31. The wireless communication method according to claim 30, wherein the step of performing a channel detection process comprises performing the channel detection process on the frequency domain resources recommended by the receiver user equipment; and/or
the step of selecting resources comprises selecting, within a COT obtained through the channel detection process, unoccupied resources determined according to the resource occupy information.

32. The wireless communication method according to claim 30, further comprising:
transmitting request information for requesting the channel detection auxiliary information to the receiver user equipment.

33. The wireless communication method according to claim 32, wherein the request information comprises information on a data packet of the transmitter user equipment.

34. The wireless communication method according to claim 33, wherein the channel detection auxiliary information further comprises a result of a channel detection process of the receiver user equipment, and wherein
the step of selecting resources further comprises selecting resources according to the result of the channel detection process of the receiver user equipment and the result of the channel detection process of the transmitter user equipment.

35. The wireless communication method according to claim 30, wherein the step of receiving the channel detection auxiliary information comprises:
receiving the channel detection auxiliary information through second stage Sidelink Control Information SCI or a Media Access Control MAC control element.

36. A wireless communication method performed by user equipment, comprising:

receiving, from another user equipment, Channel Occupy Time COT sharing information that comprises a location of a COT of the other user equipment in a time domain, resources occupied by the other user equipment in the COT, and a type of a channel detection process of the other user equipment; and
determining whether to share the COT of the other user equipment according to the type of the channel detection process of the other user equipment,
wherein the type of the channel detection process indicates complexity of the channel detection process.

37. The wireless communication method according to claim 36, wherein the step of determining whether to share the COT of the other user equipment comprises:
determining to share the COT of the other user equipment in a case where complexity of a channel detection process of the user equipment is lower than complexity of a channel detection process of the other user equipment.

38. The wireless communication method according to claim 36, wherein the step of determining whether to share the COT of the other user equipment comprises:
determining not to share the COT of the other user equipment in a case where complexity of a channel detection process of the user equipment is higher than or equal to complexity of a channel detection process of the other user equipment.

39. The wireless communication method according to claim 36, wherein the step of determining whether to share the COT of the other user equipment comprises:

determining to share the COT of the other user equipment, in a case where complexity of a channel detection process of the user equipment is higher than or equal to complexity of a channel detection process of the other user equipment and an end time of the COT of the user equipment is earlier than an end time of the COT of the other user equipment.

40. The wireless communication method according to claim 37 or 39, wherein the step of sharing the COT of the other user equipment comprises:

determining a location of a resource selection window in the time domain according to the location of the COT of the other user equipment in the time domain, a location of the COT of the user equipment in the time domain, and a packet delay budget PDB of the user equipment; and selecting a resource in the resource selection window.

41. The wireless communication method according to claim 40, wherein the step of determining a location of a resource selection window in the time domain comprises:

determining a start time of the resource selection window according to a start time of the COT of the user equipment, and determining an end time of the resource selection window according to a minimum value from the PDB of the user equipment and an end time of the COT of the other user equipment.

42. The wireless communication method according to claim 36, wherein the step of determining whether to share the COT of the other user equipment comprises:
determining to share the COT of the other user equipment, in a case where complexity of a channel detection process of the user equipment is higher than or equal to complexity of a channel detection process of the other user equipment and the user equipment has not obtained the COT.

43. The wireless communication method according to claim 37 or 42, wherein the step of sharing the COT of the other user equipment comprises:

determining a location of a resource selection window in the time domain according to the location of the COT of the other user equipment in the time domain, a time for decoding the COT sharing information by the user equipment, and a packet delay budget PDB of the user equipment; and

selecting a resource in the resource selection window.

44. The wireless communication method according to claim 43, wherein the step of determining a location of a resource selection window in the time domain comprises:

determining a start time of the resource selection window according to a maximum value from the time for decoding the COT sharing information by the user equipment and a start time of the COT of the other user equipment, and determining an end time of the resource selection window according to a minimum value from the PDB of the user equipment and an end time of the COT of the other user equipment.

45. The wireless communication method according to claim 36, wherein the COT sharing information further comprises frequency domain resources at which the channel detection process of the other user equipment is targeted, and wherein the wireless communication method further comprises: determining whether to share the COT of the other user equipment according to the type of the channel detection process of the other user equipment, in a case where unlicensed frequency domain resources configured for the user equipment comprises the frequency domain resources at which the channel detection process of the other user equipment is targeted.

46. The wireless communication method according to claim 36, wherein the step of receiving the COT sharing information comprises:
receiving the COT sharing information through first stage Sidelink Control Information SCI.

47. The wireless communication method according to claim 36, wherein the user equipment serves as receiver user equipment for a sidelink, and the wireless communication method further comprises:

generating channel detection auxiliary information comprising frequency domain resources at which a channel detection process is targeted and which is recommended by the receiver user equipment, and/or resource occupy information on unlicensed frequency domain resources configured for the transmitter user equipment of the sidelink; and

transmitting the channel detection auxiliary information to the transmitter user equipment.

48. The wireless communication method according to claim 47, further comprising:

determining the recommended frequency domain resources at which a channel detection process is targeted, according to unlicensed frequency domain resources configured for the receiver user equipment; and/or
determining the resource occupation information according to a historical result of the channel detection process of the receiver user equipment.

49. The wireless communication method according to claim 47, further comprising:

receiving request information from the transmitter user equipment; and
generating the channel detection auxiliary information in response to the request information.

50. The wireless communication method according to claim 49, wherein the request information comprises information on a data packet of the transmitter user equipment.

51. The wireless communication method according to claim 50, further comprising:

performing a channel detection process according to the information on the data packet;
determining the recommended resources according to a result of the channel detection process; and
including the recommended resources in the channel detection auxiliary information.

52. The wireless communication method according to claim 47, wherein the step of transmitting the channel detection auxiliary information comprises:
transmitting the channel detection auxiliary information through second stage Sidelink Control Information SCI or a Media Access Control MAC control element.

53. A computer-readable storage medium comprising executable computer instructions that, when executed by a computer, cause the computer to perform the wireless communication method according to any one of claims 27 to 52.

**FIG. 1**

user equipment 100

COT sharing
information
generation unit 110

channel detection
unit 130

request
generation unit
150

resource selection
unit 140

communication
unit 120

**FIG. 2**

UE2

UE1

UE3

**FIG. 3**

**FIG. 4**

**FIG. 5**

**FIG. 6**

**FIG. 7**

**FIG. 8**

**FIG. 9**

**FIG. 10**

**FIG. 11**

resource selection window

n    n+T1                         n+T2

t

**FIG. 12**

resource selection window

COT of
current UE    part of COT of other UE

n                                n+T2

t

EP 4 498 715 A1

**FIG. 13**

| UE 1 | UE 2 |
|------|------|

S1301 performing channel detection and generating COT sharing information

S1302 COT sharing information

S1303 determining whether to share COT of UE1

**FIG. 14**

| transmitter UE | receiver UE |
|----------------|-------------|

S1401 establishing PC5 RRC connection

S1402 performing channel detection and generating COT sharing information

S1403 COT sharing information

S1404 determining whether to share COT of transmitter UE

**FIG. 15**

```
        ┌──────────────┐                    ┌──────────────┐
        │ transmitter  │                    │  receiver    │
        │     UE       │                    │     UE       │
        └──────┬───────┘                    └──────┬───────┘
               │          S1501                    │
               │◄─────────────────────────────────┤
               │  establishing PC5 RRC connection  │
               │                                   │
               │  S1502 channel detection auxiliary│
               │◄─────────────────────────────────┤
               │  information                      │
        ┌──────┴───────────┐                       │
        │ S1503 performing │                       │
        │channel detection │                       │
        │ and generating   │                       │
        │      COT         │                       │
        │sharing information│                      │
        └──────┬───────────┘                       │
               │   S1504 COT sharing information    │
               ├──────────────────────────────────►│
               │                           ┌────────┴────────┐
               │                           │ S1505 determining│
               │                           │ whether to share │
               │                           │ COT of transmitter│
               │                           │       UE         │
               │                           └────────┬────────┘
               │                                    │
```

**FIG. 16**

```
        ┌──────────────┐                    ┌──────────────┐
        │ transmitter  │                    │  receiver    │
        │     UE       │                    │     UE       │
        └──────┬───────┘                    └──────┬───────┘
               │          S1601                    │
               │◄─────────────────────────────────┤
               │  establishing PC5 RRC connection  │
               │                                   │
               │     S1602 requesting information  │
               ├──────────────────────────────────►│
               │                                   │
               │  S1603 channel detection auxiliary│
               │◄─────────────────────────────────┤
               │  information                      │
        ┌──────┴───────────┐                       │
        │ S1604 performing │                       │
        │channel detection │                       │
        │ and generating   │                       │
        │      COT         │                       │
        │sharing information│                      │
        └──────┬───────────┘                       │
               │   S1605 COT sharing information    │
               ├──────────────────────────────────►│
               │                           ┌────────┴────────┐
               │                           │ S1606 determining│
               │                           │ whether to share │
               │                           │ COT of transmitter│
               │                           │       UE         │
               │                           └────────┬────────┘
               │                                    │
```

**FIG. 17**

| transmitter UE | | receiver UE |
|---|---|---|

S1701 establishing PC5 RRC connection

S1702 requesting information (data packet information)

S1703 performing channel detection according to data packet information and generating channel detection auxiliary information

S1704 channel detection auxiliary information

S1705 performing channel detection, selecting resources according to the channel detection result and a result of channel detection of the receiver UE, and generating COT sharing information

S1706 COT sharing information

S1707 determining whether to share COT of transmitter UE

**FIG. 18**

| transmitter UE | | receiver UE |
|---|---|---|

S1801 establishing PC5 RRC connection

S1802 requesting information (data packet information)

S1803 performing channel detection according to data packet information and generating channel detection auxiliary information

S1804 channel detection auxiliary information

S1805 selecting resources according to channel detection auxiliary information

**FIG. 19**

Start

generating COT sharing information that includes a location of COT of user equipment on a time domain, resources occupied by the user equipment in the COT, and a type of a channel detection process of the user equipment, the type of the channel detection process indicating complexity of the channel detection process — S1910

transmitting the COT sharing information to another user equipment — S1920

End

**FIG. 20**

Start

receiving from another user equipment COT sharing information that includes a location of COT of the other user equipment on a time domain, resources occupied by the other user equipment in the COT, and a type of a channel detection process of the other user equipment, the type of the channel detection process indicating complexity of the channel detection process — S2010

determining whether to share the COT of the other user equipment according to the type of the channel detection process of the other user equipment — S2020

End

**FIG. 21**

**FIG. 22**

## INTERNATIONAL SEARCH REPORT

| International application No. |
|---|
| **PCT/CN2023/088256** |

| A. | CLASSIFICATION OF SUBJECT MATTER |
|---|---|

H04W4/70(2018.01)i

According to International Patent Classification (IPC) or to both national classification and IPC

| B. | FIELDS SEARCHED |
|---|---|

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, ENTXTC, WPABSC, ENTXT, WPABS, VEN, CNKI, 3GPP: 共享, 信道占用时间, 先听后说, 信道检测, 类型, 时域, 资源, 直连链路, 直通链路, share, COT, LBT, channel detect, type, time domain, resource, M2M, D2D

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 112470505 A (SONY CORP.) 09 March 2021 (2021-03-09)<br>entire document | 1-53 |
| A | CN 111713124 A (GUANGDONG OPPO MOBILE TELECOMMUNICATIONS CORP., LTD.) 25 September 2020 (2020-09-25)<br>entire document | 1-53 |
| A | CN 113396633 A (SONY CORP.) 14 September 2021 (2021-09-14)<br>entire document | 1-53 |
| A | US 2022070865 A1 (SONY CORP.) 03 March 2022 (2022-03-03)<br>entire document | 1-53 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 May 2023** | **06 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" rowspan="2" align="center">INTERNATIONAL SEARCH REPORT<br>Information on patent family members</td><td colspan="2">International application No.</td></tr>
<tr><td colspan="2" align="center">**PCT/CN2023/088256**</td></tr>
</table>

| Patent document cited in search report | | | Publication date (day/month/year) | Patent family member(s) | | | Publication date (day/month/year) |
|---|---|---|---|---|---|---|---|
| CN | 112470505 | A | 09 March 2021 | WO | 2020024854 | A1 | 06 February 2020 |
| | | | | US | 2021368351 | A1 | 25 November 2021 |
| | | | | US | 11546778 | B2 | 03 January 2023 |
| | | | | EP | 3817428 | A1 | 05 May 2021 |
| | | | | EP | 3817428 | A4 | 17 November 2021 |
| | | | | US | 2023087182 | A1 | 23 March 2023 |
| CN | 111713124 | A | 25 September 2020 | | None | | |
| CN | 113396633 | A | 14 September 2021 | US | 2022078845 | A1 | 10 March 2022 |
| | | | | EP | 3927102 | A1 | 22 December 2021 |
| | | | | EP | 3927102 | A4 | 20 April 2022 |
| | | | | WO | 2020164439 | A1 | 20 August 2020 |
| US | 2022070865 | A1 | 03 March 2022 | WO | 2020182067 | A1 | 17 September 2020 |
| | | | | EP | 3941104 | A1 | 19 January 2022 |

Form PCT/ISA/210 (patent family annex) (July 2022)

**REFERENCES CITED IN THE DESCRIPTION**

**Patent documents cited in the description**

- CN 202210421584